# EUROPEAN PATENT APPLICATION

(11) **EP 4 723 707 A1**
(43) Date of publication of application: **08.04.2026**
(21) Application number: 23943982.1
(22) Date of filing: 03.07.2023
(51) Int. Cl.: H04W 12/06, H04L 9/40

(54) **COMMUNICATION METHOD, COMMUNICATION APPARATUS, MEDIUM, AND PROGRAM PRODUCT**

(71) Applicant: Huawei Technologies Co., Ltd., Shenzhen, Guangdong 518129 (CN)
(72) Inventor: SONG, Yurong, Shenzhen, Guangdong 518129 (CN); LIU, Fei, Shenzhen, Guangdong 518129 (CN); WANG, Donghui, Shenzhen, Guangdong 518129 (CN); JAVALI, Chitra, Shenzhen, Guangdong 518129 (CN)
(74) Representative: Goddar, Heinz J.
(86) International application number: PCT/CN2023/105563
(87) International publication number: WO 2025/007248

(57) **Abstract**

The present disclosure provides a communication method, a communication apparatus, a computer-readable storage medium, and a computer program product. The communication method includes: A communication security apparatus obtains a trustworthiness service request for a terminal, determines a security algorithm for the trustworthiness service request according to a trustworthiness policy, executes the security algorithm to obtain a trustworthiness service execution result, and sends a trustworthiness service response including the trustworthiness service execution result. In this manner, a security function can be effectively decoupled from a communication function, facilitating independent evolution and flexible deployment of a security capability.

## Description

### TECHNICAL FIELD

Embodiments of the present disclosure relate to the communication field, and more specifically, to a communication method, a communication apparatus, a computer-readable storage medium, and a computer program product.

### BACKGROUND

A mobile communication network generally includes three parts: a core network (CN, core network), a radio access network (RAN, radio access network), and user equipment (UE, user equipment). The user equipment belongs to a user and is directly controlled by the user. The access network and the core network belong to an operator and are directly controlled by the operator. Before the user uses operator services and network resources, mutual negotiation, that is, authentication between the user and the operator is required to confirm authentic identities of both communication parties.

Conventionally, authentication on a user equipment side is implemented by a universal subscriber identity module (subscriber identity module, USIM) together with mobile equipment (Mobile Equipment, ME) of a terminal device. The ME is mainly responsible for a communication module. In addition, the ME supports some key derivation and authentication parameter generation. When UE accesses a network, key derivation and storage and authentication parameter generation are performed by the USIM together with the ME. It can be learned that security is set as a function of the UE, and is tightly coupled with a communication function. Security function update and upgrade requires modification to configurations of the USIM and the ME, involving heavy workload and complex operations. In addition, the existing communication standards give little consideration for security, offering only encryption, integrity protection, authentication, and authorization. Any additional security capabilities are left to the discretion of operators or equipment manufacturers to design. Moreover, some environments within user devices have weak security protection, causing risks in an authentication process to some extent.

### SUMMARY

**In** view of this, embodiments of the present disclosure provide a communication method, a communication apparatus, a computer-readable storage medium, and a computer program product, to provide a trustworthiness service.

According to a first aspect, a communication method is provided. The method includes: A communication security apparatus obtains a trustworthiness service request for a terminal; the communication security apparatus determines a security algorithm for the trustworthiness service request according to a trustworthiness policy; the communication security apparatus executes the security algorithm to obtain a trustworthiness service execution result; and the communication security apparatus sends a trustworthiness service response including the trustworthiness service execution result. In this manner, a dedicated communication security apparatus with a high security level is disposed to perform a function related to a trustworthiness service, so that an overall security level can be improved.

In some implementations of the first aspect, the trustworthiness service request is received from a communication apparatus of the terminal, and the trustworthiness service response is sent to the communication apparatus. In this manner, when the communication security apparatus is disposed independent of the communication apparatus, a transceiver function of the communication apparatus can be used to communicate with another network node.

In some implementations of the first aspect, the trustworthiness service request is obtained from a network device, and the communication apparatus is integrated with the communication security apparatus of the terminal. In this implementation, for example, the communication security apparatus and the communication apparatus run at different layers. In this manner, the communication apparatus cannot parse or extract information from or to the communication security apparatus, so that it is difficult for the information to be leaked through the communication apparatus.

In some implementations of the first aspect, the trustworthiness service request is obtained and sent at a trustworthiness protocol layer. In this manner, a dedicated trustworthiness protocol layer is set, so that a message related to the trustworthiness service can be protected from being obtained by another component, to improve security.

In some implementations of the first aspect, executing the security algorithm includes: In response to determining that the trustworthiness service request includes a set of authentication request parameters, the communication security apparatus verifies at least one security parameter in a set of authentication parameters, where in response to that the verification succeeds, the trustworthiness service execution result includes a first authentication response parameter, and the first authentication response parameter is obtained by executing a first security algorithm in the security algorithm based on the set of authentication request parameters; or in response to that the verification fails, the trustworthiness service execution result includes a verification failure indication.

In some implementations of the first aspect, executing the security algorithm includes: In response to determining that the trustworthiness service request includes a set of authentication request parameters, the communication security apparatus verifies at least one security parameter in a set of authentication parameters, where in response to that the verification succeeds, the trustworthiness service execution result includes a second authentication response parameter, the second authentication response parameter is obtained by executing a second security algorithm in the security algorithm based on the first authentication response parameter, and the first authentication response parameter is obtained by executing a first security algorithm in the security algorithm based on the set of authentication request parameters; or in response to that the verification fails, the trustworthiness service execution result includes a verification failure indication.

In these implementations, the communication security apparatus is independent of the communication apparatus, and replaces the identity identification apparatus to perform verification on a security parameter and calculation of a response parameter. In this manner, an authentication service is integrated, so that exchange of authentication information is reduced, to improve security.

In some implementations of the first aspect, the at least one security parameter includes at least one of the following: an authentication code or a sequence number. In this manner, validity of the authentication parameter can be determined by verifying the authentication code and the sequence number, to further improve security.

In some implementations of the first aspect, executing the first security algorithm further includes: The communication security apparatus obtains a set of key parameters; and the communication security apparatus executes the first security algorithm based on the set of key parameters and the set of authentication request parameters, to obtain the first authentication response parameter. In some alternative implementations, obtaining a set of key parameters includes: The communication security apparatus sends a request for the set of key parameters to the identity identification apparatus; and the communication security apparatus receives the set of key parameters from the identity identification apparatus. In this manner, a response parameter related to user equipment can be generated by obtaining the key, to facilitate another network node to perform corresponding authentication subsequently.

In some implementations of the first aspect, executing the security algorithm includes: In response to determining that the trustworthiness service request includes the set of authentication request parameters, the communication security apparatus sends the set of authentication request parameters to the identity identification apparatus; the communication security apparatus receives the first authentication response parameter from the identity identification apparatus, where the first authentication response parameter is determined by the identity identification apparatus based on the set of authentication request parameters; and the communication security apparatus executes the second security algorithm in the security algorithm based on the first authentication response parameter to obtain the second authentication response parameter, where the trustworthiness service execution result includes the second authentication response parameter. In this implementation, an authentication function of the identity identification apparatus remains unchanged. In this manner, it is unnecessary to change a conventional configuration of the identity identification apparatus, to improve applicability of the method.

In some implementations of the first aspect, the method further includes: In response to determining that the terminal includes a plurality of identity identification apparatuses, the communication security apparatus selects a target identity identification apparatus from the plurality of identity identification apparatuses based on a predetermined configuration. In this implementation, the terminal may include different identity identification apparatuses from two providers. Through selection, the authentication service can be completed by using an appropriate identity identification apparatus.

In some implementations of the first aspect, selecting the target identity identification apparatus includes: In response to determining that corresponding priorities are set for the plurality of identity identification apparatuses, the communication security apparatus selects an identity identification apparatus with a highest priority in the plurality of identity identification apparatuses as the target identity identification apparatus; in response to determining that no priority is set for the plurality of identity identification apparatuses, the communication security apparatus selects a currently activated identity identification apparatus as the target identity identification apparatus, where the activated identity identification apparatus is providing a communication service; or in response to determining that none of the plurality of identity identification apparatuses provides the communication service, the communication security apparatus presents options for the plurality of identity identification apparatuses to a user, and in response to receiving a selection of the user, the communication security apparatus selects an identity identification apparatus selected by the user as the target identity identification apparatus. In this manner, an appropriate identity identification apparatus can be determined according to different rules.

In some implementations of the first aspect, the trustworthiness policy is negotiated between the communication security apparatus and a network device. In this manner, a communication apparatus with a low security level or another component of the terminal is replaced during negotiation with communication security apparatus, to further improve security.

In some implementations of the first aspect, executing the security algorithm includes: In response to determining that the trustworthiness service request includes challenge information for a trustworthiness measurement, the communication security apparatus executes a third security algorithm in the security algorithm based on the challenge information to obtain evidence, where the trustworthiness service execution result includes the evidence. In this manner, a dedicated communication security apparatus is used to determine a security algorithm for the trustworthiness measurement, so that security related to a trustworthiness measurement service can be improved.

In some implementations of the first aspect, executing the security algorithm includes: In response to determining that the trustworthiness service request includes the challenge information for the trustworthiness measurement, the communication security apparatus sends the challenge information to a trustworthiness apparatus of the terminal; and the communication security apparatus receives evidence from the trustworthiness apparatus, where the evidence is generated by the trustworthiness apparatus based on the challenge information, and the trustworthiness service execution result includes the evidence. In this manner, a dedicated communication security apparatus is used to exchange information with the trustworthiness apparatus, so that security related to a trustworthiness measurement service can be improved.

In some implementations of the first aspect, the trustworthiness apparatus is integrated into the communication security apparatus. In some alternative implementations, the trustworthiness apparatus is integrated into the communication apparatus or the identity identification apparatus. In this manner, apparatuses for performing different trustworthiness services are integrated, to facilitate protecting the security parameter from being leaked.

In some implementations of the first aspect, the method further includes: The communication security apparatus signs the evidence, where the trustworthiness service result includes a signature for the evidence. In this way, security of the evidence is further improved by re-signing.

According to a second aspect, a communication security apparatus is provided. The communication security apparatus includes: a transceiver module, configured to obtain a trustworthiness service request for a terminal; a processing module, configured to determine a security algorithm for the trustworthiness service request according to a trustworthiness policy, where the processing module is further configured to execute the security algorithm to obtain a trustworthiness service execution result; and the transceiver module is further configured to send a trustworthiness service response including the trustworthiness service execution result.

In some implementations of the second aspect, the trustworthiness service request is received from a communication apparatus of the terminal, and the trustworthiness service response is sent to the communication apparatus.

In some implementations of the second aspect, the trustworthiness service request is obtained from a network device, and the communication apparatus is integrated with the communication security apparatus of the terminal.

In some implementations of the second aspect, the trustworthiness service request is obtained and sent at a trustworthiness protocol layer.

In some implementations of the second aspect,
the processing module is specifically configured to: in response to determining that the trustworthiness service request includes a set of authentication request parameters, verify at least one security parameter in a set of authentication parameters, where in response to that the verification succeeds, the trustworthiness service execution result includes a first authentication response parameter, the first authentication response parameter is obtained by executing a first security algorithm in the security algorithm based on the set of authentication request parameters; or in response to that the verification fails, the trustworthiness service execution result includes a verification failure indication.

In some implementations of the second aspect, performing a module includes: The processing module is specifically configured to: in response to determining that the trustworthiness service request includes a set of authentication request parameters, verify at least one security parameter in a set of authentication parameters, where in response to that the verification succeeds, the trustworthiness service execution result includes a second authentication response parameter, the second authentication response parameter is obtained by executing a second security algorithm in the security algorithm based on the first authentication response parameter, and the first authentication response parameter is obtained by executing a first security algorithm in the security algorithm based on the set of authentication request parameters; or in response to that the verification fails, the trustworthiness service execution result includes a verification failure indication.

In some implementations of the second aspect, the at least one security parameter includes at least one of the following: an authentication code or a sequence number.

In some implementations of the second aspect, the transceiver module is specifically configured to obtain a set of key parameters; and the processing module is specifically configured to execute the first security algorithm based on the set of key parameters and the set of authentication request parameters, to obtain the first authentication response parameter.

In some implementations of the second aspect, the transceiver module is specifically configured to: send a request for a set of key parameters to the identity identification apparatus; and receive the set of key parameters from the identity identification apparatus.

In some implementations of the second aspect, the transceiver module is specifically configured to: in response to determining that the trustworthiness service request includes the set of authentication request parameters, send the set of authentication request parameters to the identity identification apparatus; receive the first authentication response parameter from the identity identification apparatus, where the first authentication response parameter is determined by the identity identification apparatus based on the set of authentication request parameters. In addition, the processing module is specifically configured to: execute the second security algorithm in the security algorithm based on the first authentication response parameter, to obtain the second authentication response parameter, where the trustworthiness service execution result includes the second authentication response parameter.

In some implementations of the second aspect, the trustworthiness policy is negotiated between the communication security apparatus and a network device.

In some implementations of the second aspect, the processing module is further configured to: in response to determining that the terminal includes a plurality of identity identification apparatuses, select a target identity identification apparatus from the plurality of identity identification apparatuses based on a predetermined configuration.

In some implementations of the second aspect, the processing module is specifically configured to: in response to determining that corresponding priorities are set for the plurality of identity identification apparatuses, select an identity identification apparatus with a highest priority in the plurality of identity identification apparatuses as the target identity identification apparatus; in response to determining that no priority is set for the plurality of identity identification apparatuses, select a currently activated identity identification apparatus as the target identity identification apparatus, where the activated identity identification apparatus is providing a communication service; or in response to determining that none of the plurality of identity identification apparatuses provides the communication service, present options for the plurality of identity identification apparatuses to a user, and in response to receiving a selection of the user, select an identity identification apparatus selected by the user as the target identity identification apparatus.

In some implementations of the second aspect, the processing module is further configured to: in response to determining that the trustworthiness service request includes challenge information for a trustworthiness measurement, execute a third security algorithm in the security algorithm based on the challenge information to obtain evidence, where the trustworthiness service execution result includes the evidence.

In some implementations of the second aspect, the transceiver module is specifically configured to: in response to determining that the trustworthiness service request includes challenge information for trustworthiness measurement, send the challenge information to a trustworthiness apparatus of user equipment; and receive evidence from the trustworthiness apparatus, where the evidence is generated by the trustworthiness apparatus based on the challenge information, and the trustworthiness service execution result includes the evidence.

In some implementations of the second aspect, the trustworthiness apparatus is integrated into the communication security apparatus.

In some implementations of the second aspect, the trustworthiness apparatus is integrated into a communication apparatus or an identity identification apparatus.

In some implementations of the second aspect, the processing module is further configured to sign the evidence, where the trustworthiness service result includes a signature for the evidence.

According to a third aspect, a communication apparatus is provided. The communication apparatus includes a processor, the processor is coupled to a memory, the memory stores instructions, and when the instructions are executed by the processor, the first communication apparatus is caused to perform any method according to any one of the first aspect and the implementations of the first aspect.

According to a fourth aspect, a computer-readable storage medium is provided. The computer-readable storage medium stores instructions, and when the instructions are run, the method according to any one of the first aspect or the implementations of the first aspect is performed.

According to a fifth aspect, a computer program product is provided. The computer program product includes instructions, and when the instructions are run, the method according to any one of the first aspect or the implementations of the first aspect is performed.

According to a sixth aspect, a communication system is provided. The communication system includes the communication apparatus according to the third aspect.

### BRIEF DESCRIPTION OF DRAWINGS

With reference to the accompanying drawings and the following detailed descriptions, the foregoing and other features, advantages, and aspects of embodiments of the present disclosure become more apparent. In the accompanying drawings, same or similar reference numerals indicate same or similar elements.
FIG. 1A shows an example communication architecture scenario in which an embodiment of the present disclosure may be implemented;
FIG. 1B to FIG. 1H are simplified block diagrams of an example terminal device according to embodiments of the present disclosure;
FIG. 2 shows a signaling process of performing a trustworthiness service according to an embodiment of the present disclosure;
FIG. 3 shows a signaling process of terminal authentication according to some embodiments of the present disclosure;
FIG. 4A and FIG. 4B show signaling processes of terminal authentication according to some other embodiments of the present disclosure;
FIG. 5A and FIG. 5B show signaling processes of terminal authentication according to some other embodiments of the present disclosure;
FIG. 6A and FIG. 6B show signaling processes of trustworthiness measurements according to some embodiments of the present disclosure;
FIG. 7A and FIG. 7B show signaling processes of trustworthiness measurements according to some embodiments of the present disclosure;
FIG. 8 is a flowchart of a method according to an embodiment of the present disclosure;
FIG. 9 is a simplified block diagram of an example device in a possible implementation according to an embodiment of the present disclosure; and
FIG. 10 is a simplified block diagram of an example device in a possible implementation according to an embodiment of the present disclosure.

Throughout all the accompanying drawings, same or similar reference numerals represent same or similar components.

### DESCRIPTION OF EMBODIMENTS

Embodiments of the present disclosure are described in more detail in the following with reference to the accompanying drawings. Although some embodiments of this application are shown in the accompanying drawings, it should be understood that the present disclosure may be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In the descriptions of embodiments of the present disclosure, the term "including" and similar terms thereof should be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of the present disclosure may be implemented according to any appropriate communication protocol, including but not limited to cellular communication protocols such as a 4th generation (4th generation, 4G), a 5th generation (5th generation, 5G), and a communication protocol evolved after 5G (for example, a 6th generation (6th generation, 6G)), and/or any other protocols currently known or developed in the future.

The technical solutions in embodiments of the present disclosure are applied to a communication system that complies with any proper communication protocol, for example, a long term evolution (Long Term Evolution, LTE) system, a frequency division duplex (Frequency Division Duplex, FDD) system, a time division duplex (Time Division Duplex, TDD) system, a 5G system (for example, new radio (New Radio, NR)), and a communication system evolved after 5G (for example, a 6G system).

For the purpose of description, the following describes embodiments of the present disclosure in a background of a cellular communication system in the 3rd generation partnership project (3rd Generation Partnership Project, 3GPP). However, it should be understood that embodiments of the present disclosure are not limited to the communication system, but may be applied to any communication system having a similar problem, for example, a wireless local area network (Wireless Local Area Network, WLAN), a wired communication system, or another communication system developed in the future.

The term "terminal device" used in the present disclosure refers to any terminal device that can perform wired or wireless communication with a network device or between terminal devices. A terminal or a terminal device may be sometimes referred to as user equipment (User Equipment, UE). The terminal device may be any type of mobile terminal, fixed terminal, or portable terminal. The terminal device may be various wireless communication devices that have a wireless communication function. With emergence of internet of things (Internet of Things, IoT) technologies, more devices that previously do not have a communication function, for example, but not limited to, a household appliance, a transportation vehicle, a tool device, a service device, and a service facility, start to obtain a wireless communication function by being configured with a wireless communication unit, to access a wireless communication network to accept remote control. Such a device has the wireless communication function because the device is configured with the wireless communication unit, and is therefore classified as a wireless communication device. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), customer-premises equipment (customer-premises equipment, CPE), a smart point of sale (point of sale, POS) machine, a wireless data card, a wireless modulator demodulator (Modulator demodulator, Modem), a positioning device, a radio broadcast receiver, an e-book device, a game device, an IoT device, an in-vehicle device, an airplane, a virtual reality (Virtual Reality, VR) device, an augmented reality (Augmented Reality, AR) device, a wearable device (for example, a smartwatch), a terminal in device-to-device (device-to-device, D2D) communication, a terminal in vehicle to everything (vehicle to everything, V2X), a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or any terminal device in an evolved public land mobile network (Public Land Mobile Network, PLMN), another device that can be used for communication, or any combination thereof. This is not limited in embodiments of the present disclosure.

The term "network device" used in the present disclosure is an entity or a node that may be configured to communicate with a terminal device, for example, may be an access network device. The access network device may be an apparatus that is deployed in a radio access network and that provides a wireless communication function for a mobile terminal, for example, may be a node in a radio access network (Radio Access Network, RAN), may also be referred to as an access network device, or may be referred to as a RAN node (or device). The network device is configured to help a terminal implement radio access. In a possible scenario, the network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6th generation (6th generation, 6G) mobile communication system, a base station in a future mobile communication system, a satellite, an integrated access and backhaul (integrated access and backhaul, IAB) node, or a network device that is in a non-terrestrial network (non-terrestrial network, NTN) communication system of a mobile switching center and that may be deployed on a high-altitude platform, a satellite, or the like. Based on a size of a provided service coverage area, the access network device may include a macro base station for providing a macro cell (Macro cell), a micro base station for providing a micro cell (Pico cell), a pico base station for providing a pico cell, and a femto base station for providing a femto cell (Femto cell). In some possible scenarios, the network device may alternatively be a device that functions as a base station in device to device (device to device, D2D) communication, internet of vehicles communication, unmanned aerial vehicle communication, or machine-to-machine communication. Optionally, the network device may alternatively be a server, a wearable device, a vehicle, a vehicle-mounted device, or the like. For example, an access network device in a vehicle-to-everything (vehicle-to-everything, V2X) technology may be a roadside unit (roadside unit, RSU).

In another possible scenario, a plurality of network devices collaborate to assist a terminal in implementing radio access, and different network devices respectively implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, or a DU node, or a device including the CU node and the DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

For ease of description, in subsequent embodiments of the present disclosure, the foregoing apparatuses that provide a wireless communication function for the mobile terminal are collectively referred to as a network device. A form of the network device is not limited in embodiments of the present disclosure. The apparatus configured to implement a function of the network device may be a network device, or may be an apparatus that can support the network device in implementing the function, for example, a chip system. The apparatus may be installed in the network device or used in cooperation with the network device.

As mentioned above, a USIM is a card with a higher security level than mobile equipment, and stores a subscription permanent identifier (Subscription Permanent Identifier, SUPI) and a user root key (K). In addition, the USIM can support derivation from the root key to an encryption key and an integrity protection key, and can also support generation of an authentication parameter and support network authentication. The ME is mainly responsible for a communication module. In addition, the ME supports derivation of a part of keys and generation of an authentication parameter. When UE accesses a network, derivation and storage of a key and generation of an authentication parameter are performed by the USIM together with the ME.

In a current setting, a security service is set as a function of the UE and is tightly coupled with a communication function. In this case, if a security function is updated and upgraded, configuration modifications for the USIM and the ME need to be performed with a heavy workload and a complex operation. In addition, the conventional communication standard has limited settings for the security function, including only encryption, integrity protection, authentication, and authorization parts. If a new security capability is needed, the new security capability can only rely on independent design of operators or equipment manufacturers. As a result, there is no unified standard procedure for adding, deleting, or modifying a security function. In addition, a security function in an authentication process is distributed in the ME and the USIM, and is implemented by the ME together with the USIM. Although the USIM provides an environment with a high security level, a security protection level of the ME is relatively weak, resulting in a high security risk. A security module is coupled with a communication module and there is no independent processing mechanism.

In view of this, embodiments disclosed in the present disclosure provide a mechanism for providing, by using an independently disposed security module, services associated with a plurality of trustworthiness security services. In this mechanism, a dedicated security function module is deployed on a UE side to take over a security function performed on the ME, so that security can be effectively decoupled from communication, to facilitate independent evolution and flexible deployment of a security capability. In addition, the dedicated security module can provide a plurality of security algorithms, such as encryption and authentication. Therefore, a user may perform selection based on a requirement and perform independent configuration, so that the dedicated security module helps implement servicification of the security function. A conventional process in which a terminal invokes the security function is transformed into the terminal requesting a security service from the security module and the security module providing the security service, to implement standardization of a request response procedure for the security service.

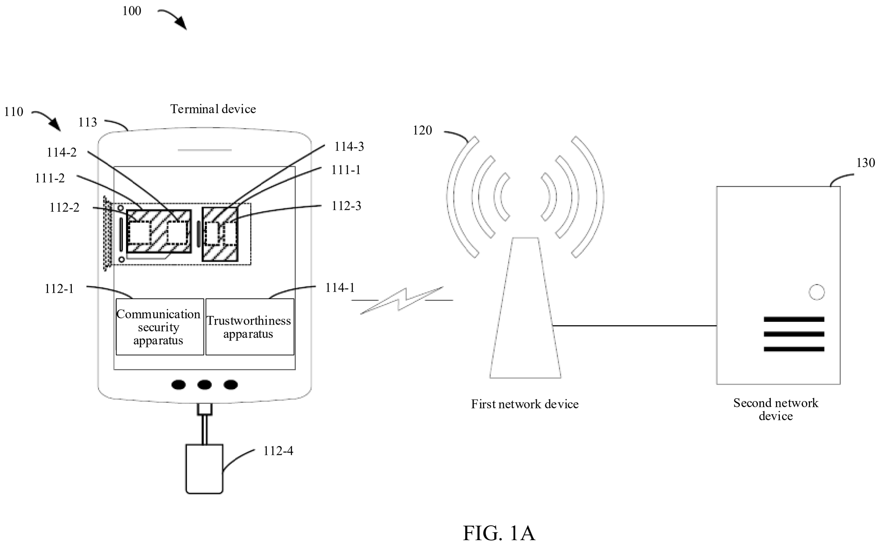

FIG. 1A shows an example communication architecture scenario 100 in which embodiments of the present disclosure may be implemented. In the architecture scenario 100, there are a terminal device (UE) 110, a first network device 120, and a second network device 130. For example, the first network device 120 may be an access network device, and the second network device 130 may be a core network device. The terminal device 110 is connected to the second network device 130 through the base station 120, and uses a network service provided by the second network device 130. The terminal device 110 includes two identity identification modules 111-1 and 111-2 (collectively referred to as an identity identification module 111) that are configured to store a security authentication parameter. In a possible implementation, the identity identification module 111 may be a USIM, or may be any type of mobile phone card, such as a subscriber identity module (Subscriber Identity Module, SIM), an electronic SIM (electronic SIM, eSIM) card, a virtual SIM (virtual SIM, vSIM) card, a universal integrated circuit card (Universal Integrated Circuit Card, UICC), an electronic UICC (electronic UICC, eUICC) card, or a soft SIM (soft SIM) card. The terminal device 110 further includes a communication apparatus 113 used for a communication function, which may be, for example, ME. The terminal device 110 further includes a dedicated security module configured to perform a security function, including a communication security apparatus 112-1 deployed on the communication apparatus 113, a communication security apparatus 112-3 integrated into the identity identification module 111-1, a communication security apparatus 112-2 integrated into the identity identification module 111-2, and a communication security apparatus 112-4 independent of the terminal device 110 (where the communication security apparatus 112-4, the communication security apparatus 112-1, the communication security apparatus 112-2, and the communication security apparatus 112-3 are collectively referred to as a communication security apparatus 112). In a possible implementation, the communication security apparatus 112 may provide security functions of a conventional 5G network, such as security policy negotiation, authentication, encryption, and key management, and may also provide a security function that may be applied in future 6G or the like. All security functions are provided to the identity identification module 111 and the communication apparatus 113 in a form of a service. In a possible implementation, the communication security apparatus 112 supports hot swap, and may be updated as required, so that the communication security apparatus 112 can be conveniently updated and upgraded at any subsequent time.

In addition, the terminal device 110 may further include a security module configured to perform a trustworthiness service, including a trustworthiness apparatus 114 deployed on the communication apparatus 113, a trustworthiness apparatus 114-3 integrated into the identity identification module 111-1, and a trustworthiness apparatus 114-2 integrated into the identity identification module 111-2 (where the trustworthiness apparatus 114-2, the trustworthiness apparatus 114-1, and the trustworthiness apparatus 114-3 are collectively referred to as a trustworthiness apparatus 114). The trustworthiness apparatus 114 may provide, for example, a trustworthiness measurement service.

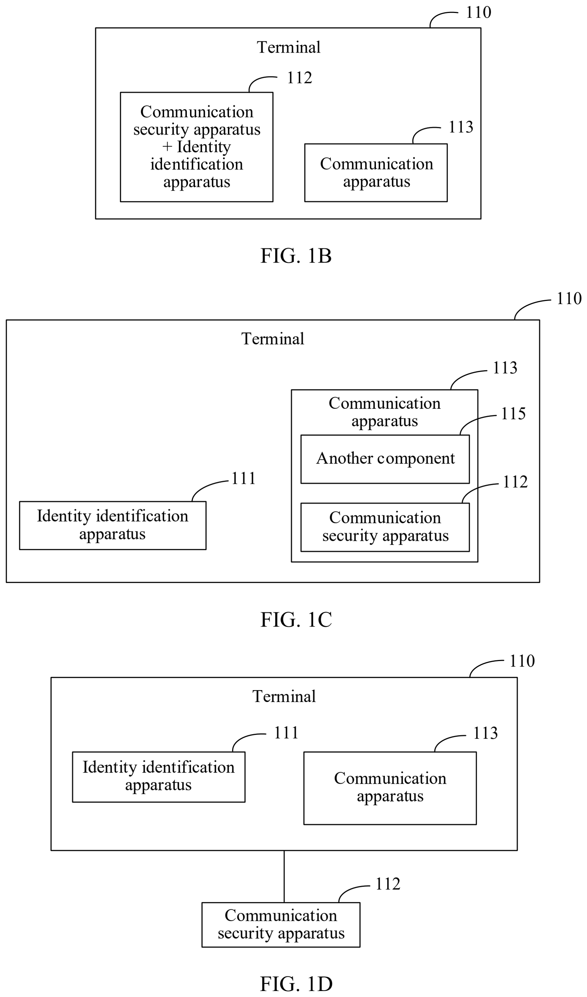

The communication security apparatus 112 is newly added to the terminal device 110, so that an independent, flexible, and extensible trustworthiness function service can be provided. Herein, the communication security apparatus 112 may be implemented in two manners. In a first manner, the communication security apparatus 112 is represented as a logical independent node in a physical or virtual form. In a second manner, the communication security apparatus 112 is represented as a logical function and is a part of the UE. The communication security apparatus 112 has a unified external interface (even if the communication security apparatus 112 is used as a logical function, there is a standardized interface for a communication node), and forms a basis for multi-party negotiation and trustworthiness communication. Specifically, as shown in FIG. 1A, there are three possible deployment solutions for the communication security apparatus 112: integration of the communication security apparatus 112-1 with the communication apparatus 113; integration of the communication security apparatus 112-2 with the identity identification module 111-2, or integration of the communication security apparatus 112-3 with the identity identification module 111-1; and the communication security apparatus 112-4 being deployed independently of the identity identification module 111 and the communication apparatus 113. The following describes in detail different architectures of the terminal device with reference to FIG. 1B to FIG. 1H.

FIG. 1B shows an architecture of the terminal device 110 corresponding to the communication security apparatus 112-2 or 112-3. As shown in FIG. 1B, the communication security apparatus 112 is integrated with an identity identification apparatus, in other words, for example, a function of an identity identification apparatus of a mobile phone card is extended to support the communication security apparatus 112, to form a new type of card with more comprehensive functions and stronger capabilities. The integration of the communication security apparatus 112 with the identity identification apparatus may alternatively be, for example, virtualizing the communication security apparatus 112 as an application of an identity identification apparatus of a smart card, in other words, the identity identification apparatus includes the communication security apparatus 112; and may alternatively be including a capability of the identity identification apparatus and stored information such as a key and a user identity in the communication security apparatus 112, in other words, the communication security apparatus 112 includes the identity identification apparatus.

FIG. 1C shows an architecture of the terminal device corresponding to the communication security apparatus 112-1. As shown in FIG. 1C, the communication security apparatus 112 may be encapsulated inside the communication apparatus 113, and virtualized as a functional module inside the communication apparatus 113. Another component 115 (for example, a communication-related function) in the communication apparatus 113 may invoke the communication security apparatus 112, and reuse an interface of the communication apparatus 113 to communicate with the identity identification module 111 and another node in a network. Herein, the communication security apparatus 112 may communicate with a corresponding security apparatus at another node at a dedicated trustworthiness service layer.

FIG. 1D shows an architecture of the terminal device corresponding to the communication security apparatus 112-4. As shown in FIG. 1D, the communication security apparatus 112 is externally connected to the terminal in a form of an independent hardware card, for example, is connected to the terminal device 110 through a USB interface.

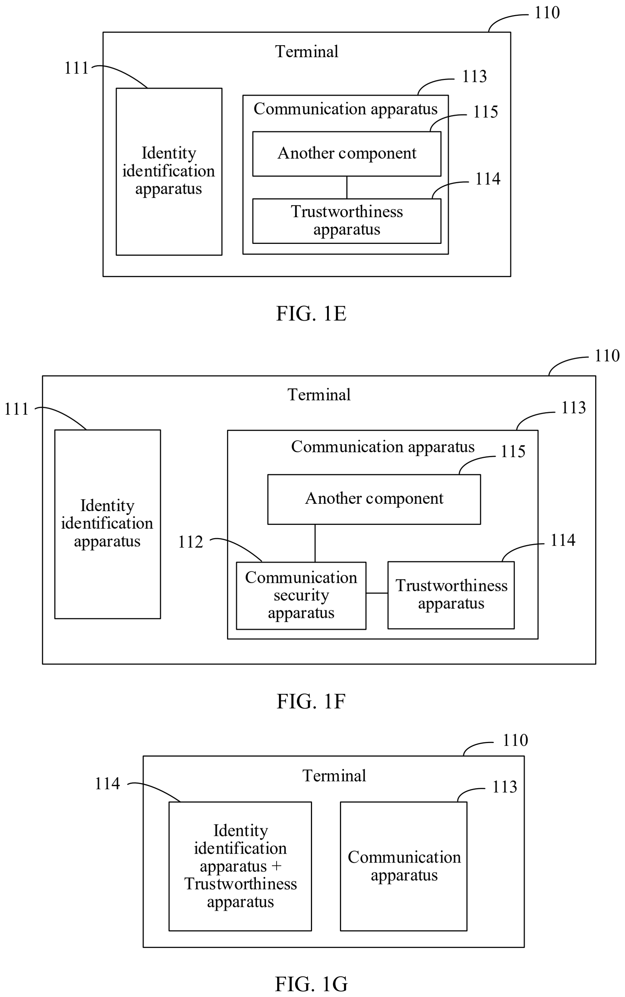

In addition, the trustworthiness apparatus 114 in the terminal device 110 may be also arranged in a plurality of manners. FIG. 1E and FIG. 1F show architectures of the terminal device 110 corresponding to the trustworthiness apparatus 114-1. As shown in FIG. 1E, the trustworthiness apparatus 114 is deployed on the communication apparatus 113. The trustworthiness apparatus 114 may be encapsulated inside the communication apparatus 113, and interact with another component 115 (for example, a communication-related function) in the communication apparatus 113. FIG. 1F further shows the communication security apparatus 112 deployed in the communication apparatus 113.

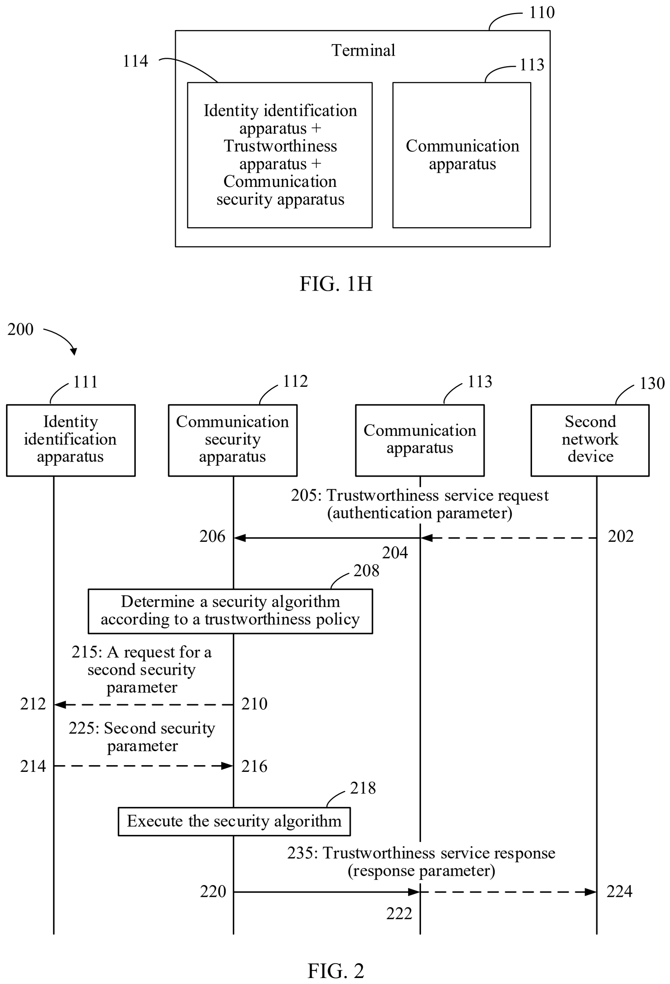

FIG. 1G and FIG. 1H show architectures of the terminal device 110 corresponding to the trustworthiness apparatuses 114-2 and 114-3. As shown in FIG. 1G, the trustworthiness apparatus 114 is integrated with the identity identification apparatus 111. Both the trustworthiness apparatus 114 and the identity identification apparatus 111 are security-related dedicated hardware modules with high compatibility for integration. The trustworthiness apparatus 114 is deployed on the identity identification apparatus 111, so that a security function can be more easily isolated from another communication function, and an internal structure and an interface of the terminal device 110 are simplified. Herein, the communication security apparatus 112 may be deployed on the communication apparatus 113, or may be independent of the communication apparatus 113 and the identity identification apparatus 111. In addition, the communication security apparatus 112 may alternatively be integrated with the trustworthiness apparatus 114 and the identity identification apparatus 111, as shown in FIG. 1H.

After the communication security apparatus 112 is added to the terminal device 110, a trustworthiness service procedure on a terminal side needs to be completed by three entities: the communication security apparatus 112, the communication apparatus 113, and the identity identification apparatus 111. In a possible implementation, the communication apparatus 113 may receive a trustworthiness service request (for example, an authentication request of a core network for the terminal device) from another node outside the terminal device 110, or the communication apparatus 113 may generate a trustworthiness service request (for example, the UE initiates a security policy negotiation procedure with the core network). Then, the communication apparatus 113 sends the trustworthiness service request to the communication security apparatus 112. In a possible implementation, the trustworthiness service request may be sent in a form of a standardized message. In an alternative embodiment, if the communication security apparatus 112 is deployed in the communication apparatus 113, the communication security apparatus 112 may alternatively be invoked in a form of a command. There are two solutions for the identity identification apparatus 111. In a possible implementation, the identity identification apparatus 111 continues to provide an original security function, and no change is made. In this case, the communication security apparatus 112 only takes over a function of the communication apparatus 113. In an alternative embodiment, the identity identification apparatus 111 is only used as a memory for security parameters such as a key and user identity information, and does not support a security algorithm any more. In this case, the communication security apparatus 112 takes over security functions of the communication apparatus 113 and the identity identification apparatus 111. In a possible implementation, the communication security apparatus 112 may perform security functions, including not only original security functions of the communication apparatus 113 and the identity identification apparatus 111, but also newly added security functions such as a trustworthiness certification and a blockchain. The following describes in general a process of performing a trustworthiness service function with reference to FIG. 2.

FIG. 2 shows a signaling process 200 of performing a trustworthiness service according to some embodiments of the present disclosure. For clarity of description without any limitation, the signaling process 200 is described with reference to FIG. 1A. For example, the signaling process 200 may be performed by the identity identification apparatuses 111-1 and 111-2, the communication security apparatus 112, the communication apparatus 113, and the second network device 130 in FIG. 1A. In an embodiment shown in FIG. 2,
when an operator needs to perform authentication on the terminal device 110, the second network device 130 sends (202) a trustworthiness service request 205 to the terminal. The communication apparatus 113 of the terminal device 110 receives the trustworthiness service request 205. In a possible implementation, the trustworthiness service request may alternatively be generated by the communication apparatus 113.

In a possible implementation, a trustworthiness service request 205 message includes one or more of the following: a core network identity, a requested trustworthiness service name, and a possible authentication parameter. For example, in an authentication and key agreement (Authentication and Key Agreement, AKA) protocol authentication process, the authentication parameter may be an authentication vector (authentication vector, AV), and the AV may include a random number (random number, RAND) and an authentication token (authentication token, AUTN). For example, the authentication parameter further includes a first security parameter for verification before performing calculation. For example, in the AKA authentication process, the first security parameter may be a message authentication code (message authentication code, MAC) and a sequence number (sequence number, SQN) in the AUTN.

After receiving the trustworthiness service request 205, the communication apparatus 113 does not process the trustworthiness service request 205, and forwards (204) the trustworthiness service request to the communication security apparatus 112. In a possible implementation, transmission of the trustworthiness service request may be performed at a trustworthiness protocol layer, and only the communication security apparatus 112 can parse the trustworthiness service request. Herein, the trustworthiness protocol layer is, for example, above a packet data convergence protocol layer.

After receiving the trustworthiness service request 205, the communication security apparatus 112 determines (208) a to-be-used security algorithm based on the trustworthiness service request and according to a trustworthiness policy. In a possible implementation, the trustworthiness policy may be determined through negotiation between the communication security apparatus 112 and the second network device 130 before a trustworthiness service procedure. A specific security algorithm used for a trustworthiness service is determined according to the trustworthiness policy obtained through trustworthiness negotiation. For example, the trustworthiness policy specifies a specific security algorithm to be invoked and a security parameter used as an input of the security algorithm. The security algorithm may include, for example, one or more of the following: an authentication algorithm, an encryption algorithm, and an integrity protection algorithm. For example, the authentication algorithm may include an authentication and key agreement AKA protocol, or an extensible authentication protocol-authentication and key agreement (Extensible Authentication Protocol-Authentication and Key Agreement, EAP-AKA) protocol, and the like; and the encryption algorithm or the integrity protection algorithm may include a SNOW (SNOW) algorithm, a ZUC (ZUC) algorithm, and the like.

Herein, compared with a related technology in which a communication apparatus negotiates with a core network, the communication security apparatus 112 replaces the terminal device to negotiate the trustworthiness policy, so that security is improved. In a possible implementation, the trustworthiness policy may further specify a conventional 5G security algorithm such as an authentication algorithm and an encryption integrity protection algorithm, and a trustworthiness certification such as a trustworthiness measurement for a trusted platform module (Trusted Platform Module, TPM), a software guard extensions (Software Guard Extensions, SGX) algorithm, and a new encryption algorithm, for example, a newly added 6G security algorithm such as post-quantum cryptography (Post-quantum cryptography, PQC) and homomorphic encryption.

In a possible implementation, if a security parameter that is used for the security algorithm and that is determined by the communication security apparatus 112 includes a second security parameter stored in the identity identification apparatus 111, the communication security apparatus 112 sends (210) a request 215 for the second security parameter to the identity identification apparatus 111. For example, the second security parameter may be a key parameter stored in the identity identification apparatus 111. Herein, the key parameter may be, for example, an operator-specific root key, or may be generated based on a root key. In a possible implementation, in the AKA authentication process, the second security parameter may be an integrity key (integrity key, IK) and a cipher key (cipher key, CK). After the identity identification apparatus 111 receives (212) the request 215 for the second security parameter from the communication security apparatus 112, the identity identification apparatus 111 sends (214) the second security parameter 225 to the communication security apparatus 112 as a response. After obtaining the first security parameter and the possible second security parameter, the communication security apparatus 112 executes (218) a corresponding security algorithm, to obtain a corresponding trustworthiness service execution result. After completing the security algorithm, the communication security apparatus 112 generates a trustworthiness service response including the trustworthiness service execution result. The trustworthiness service execution result may include, for example, a success indication, a failure indication, or a response parameter. For example, the response parameter is, for example, a first authentication response parameter. The first authentication response parameter (response, RES) is generated on an identity authentication apparatus side of the terminal based on an input security parameter and according to a predetermined algorithm, and is used for comparison with an expected authentication parameter (expected response, XRES) generated on a network device side, where the XRES is generated by using a same input parameter and a same algorithm. In a possible implementation, the response parameter may alternatively be a second authentication response parameter RES* generated on a communication apparatus side of the terminal based on the first authentication response parameter RES, and is used for authentication with different network elements on the network device side.

The communication security apparatus 112 sends (220) a trustworthiness service response message to the communication apparatus 113. Correspondingly, the communication apparatus 113 receives the trustworthiness service response message and forwards (222) the trustworthiness service response message to a request node (for example, the second network device 130).

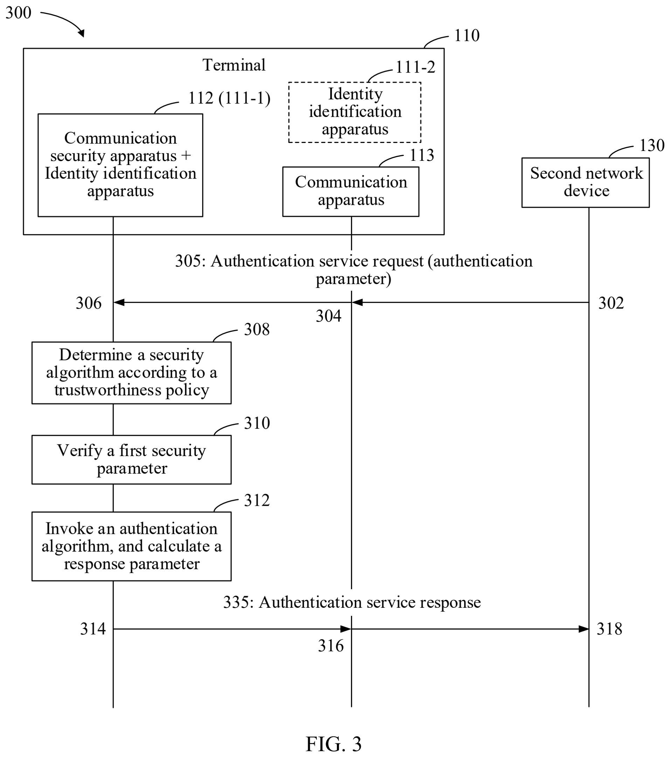

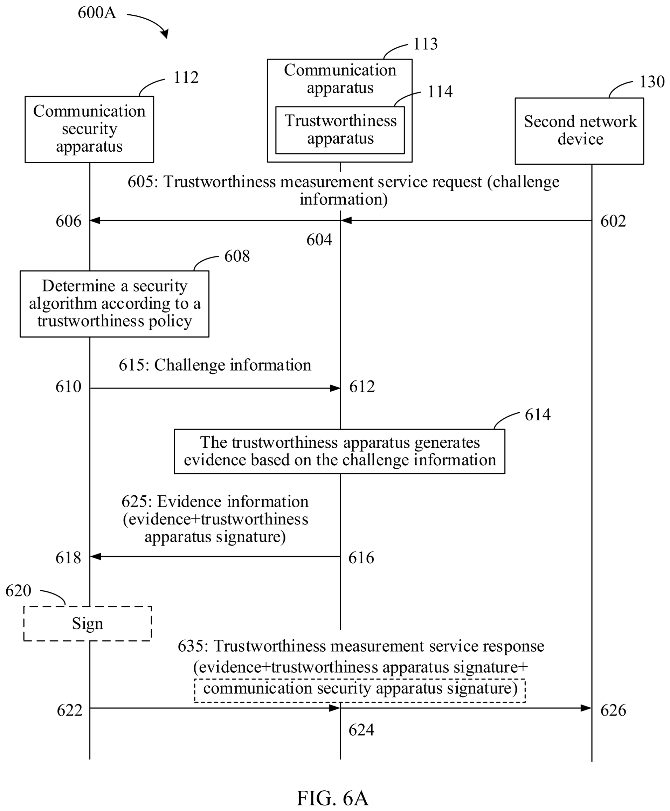

To describe embodiments disclosed in the present disclosure more clearly, the following describes embodiments disclosed in the present disclosure with reference to FIG. 3 to FIG. 7B. FIG. 3 to FIG. 5B respectively show processes of terminal authentication according to different embodiments of the present disclosure. FIG. 6A to FIG. 7B respectively show exchange processes for trustworthiness measurements according to different embodiments of the present disclosure.

FIG. 3 shows a signaling process 300 of terminal authentication according to some embodiments of the present disclosure. For clarity of description without any limitation, the signaling process 300 is described with reference to FIG. 1A. For example, the signaling process 300 may be performed by the identity identification apparatuses 111-1, the identity identification apparatus 111-2, the communication security apparatus 112, the communication apparatus 113, and the second network device 130 in FIG. 1A. In this embodiment, the communication security apparatus 112 is integrated into the identity identification apparatus 111-1, to form an identity identification apparatus having a dedicated security function, for example, a USIM having the dedicated security function. Herein, the communication security apparatus 112 represents an apparatus formed by integrating the communication security apparatus 112 with the identity identification apparatus 111-1. In this embodiment, the communication security apparatus 112 retains original security functions, for example, AUTN verification, key derivation, response parameter generation, and the like in an authentication process. The communication security apparatus 112 performs security functions originally from the communication apparatus 113 and a newly added security function, such as generating an authentication response parameter by the communication apparatus 113 in an authentication process, adding a trustworthiness certification, and the like.

As shown in FIG. 3, when the second network device 130 needs to perform authentication on the terminal device 110, the second network device 130 sends (302) an authentication service request 305 to the terminal device 110. After receiving the authentication service request 305, the communication apparatus 113 forwards an authentication service request 305 message for the terminal to the communication security apparatus 112. The message carries an authentication parameter. For example, in an AKA authentication process, the authentication parameter may be a RAND and an AUTN.

In a possible implementation, the terminal may include a plurality of identity identification apparatuses. For example, the terminal in the embodiment in FIG. 1A includes two identity identification apparatuses 111-1 and 111-2. In this implementation, after the communication security apparatus 112 receives (306) the authentication service request 305, the communication security apparatus 112 selects either the identity identification apparatus 111-1 or the identity identification apparatus 111-2, for example, according to a preconfigured rule, to perform an authentication service. In a possible implementation, each identity identification apparatus is provided with a corresponding communication security apparatus. Therefore, after receiving an authentication service request, the communication security apparatus selects a corresponding identity identification apparatus. In some other embodiments, the plurality of identity identification apparatuses share one communication security apparatus. The communication security apparatus may store a plurality of profiles and provide different security functions based on the profiles.

In a possible implementation, if the communication security apparatus 112 determines that corresponding priorities are set for the plurality of identity identification apparatuses, the communication security apparatus may select, according to a preset priority rule, an identity identification apparatus with a highest priority in the plurality of identity identification apparatuses as a target identity identification apparatus. If the communication security apparatus 112 determines that no corresponding priority is set for the plurality of identity identification apparatuses, in a possible implementation, the communication security apparatus 112 may select, according to a preset service rule, a currently activated identity identification apparatus as the target identity identification apparatus. Herein, the activated identity identification apparatus is an identity identification apparatus that is providing a communication service. The communication service may include a data service and a voice service. If the communication security apparatus 112 determines that none of the plurality of identity identification apparatuses provides the communication service, the communication security apparatus presents options for the plurality of identity identification apparatuses to a user for the user to select. When receiving a selection of the user, the communication security apparatus selects an identity identification apparatus selected by the user as the target identity identification apparatus. It should be understood that the foregoing steps are merely examples. Although execution of various rules is associated, execution of the rules may alternatively be independent.

For example, in an example in which the terminal device includes two identity identification apparatuses implemented as USIM cards, the communication security apparatus may perform, according to the following configuration rules, a function of selecting an identity identification apparatus, for example, a USIM card. (1) If a primary card and a secondary card are set for the terminal device, the communication security apparatus preferentially interacts with the primary card. (2) If no primary card is set for the terminal, the communication security apparatus selects a currently activated card to provide a trustworthiness service, where the active card is a card that is currently in use, for example, a card for a call in progress or for a data service in use. (3) If the terminal does not have a primary card or an active card, the communication security apparatus selects a default card to provide a trustworthiness service, where the default card is a card that is set by a user to be used by default. (4) If none of the foregoing is satisfied, a user is prompted through a human-machine interaction interface to manually select a card.

In the embodiment shown in FIG. 3, the communication security apparatus 112 is integrated with the identity identification apparatus 111-1, and is considered as being associated with the identity identification apparatus 111-1. Therefore, the communication security apparatus 112 selects the identity identification apparatus 111-1 to perform an authentication function. The communication security apparatus 112 parses a trustworthiness service request, and determines

(308) a to-be-used authentication algorithm according to a trustworthiness policy. After determining the authentication algorithm, the communication security apparatus 112 verifies (310) at least one first security parameter in the authentication parameter, such as a MAC and an SQN in the AKA authentication process.

That the communication security apparatus verifies the authentication parameter may include: The communication security apparatus 112 compares a received MAC with a pre-stored MAC, and determines that verification on the MAC succeeds if determining that the received MAC is the same as the pre-stored MAC. After the verification on the MAC succeeds, the communication security apparatus 112 further verifies the SQN. The communication security apparatus 112 compares a received SQN with a preset SQN range to verify freshness of an AUTN. If the communication security apparatus 112 determines that the SQN is within the preset range, the communication security apparatus 112 determines that authentication on the SQN succeeds. After verification on the SQN succeeds, the communication security apparatus 112 determines that verification on the AUTN succeeds. If verification on either the MAC or the SQN fails in a verification process, the communication security apparatus 112 determines that verification on the AUTN fails, and generates a failure indication.

After verification on the first security parameter succeeds, the communication security apparatus 112 invokes the authentication algorithm, and calculates (312) and generates an authentication response parameter. In a possible implementation, an input of the authentication algorithm is, for example, a received authentication parameter and a possible second security parameter stored in the identity identification apparatus 111. For example, the input may be an AUTN and a RAND in the AKA authentication process, and a K, an IK, and a CK from the identity identification apparatus 111. In addition, the response parameter may be, for example, a first response parameter RES. The communication security apparatus 112 generates an authentication service response 335 carrying the authentication response parameter, and sends (314) the authentication service response 335 to the communication apparatus 113. After receiving the authentication service response 335, the communication apparatus 113 forwards (316) the authentication service response 335 to the second network device 130. The second network device 130 receives (318) the authentication service response 335 to confirm an authentication result.

In such an embodiment, a dedicated communication security module is disposed, so that independence of the security function is implemented, a position of security in a communication network is improved, servicification of the security function is implemented, to facilitate upgrade and evolution of the security function. Specifically, for the communication apparatus 113, in this embodiment, a security function of the communication apparatus 113 is decoupled, and the communication apparatus 113 does not process the security parameter and does not execute the security algorithm. In a conventional communication network, the identity identification apparatus 111 has a high security level, and the communication apparatus 113 is mainly responsible for a communication function, has a low security level, and is vulnerable to attacks. Therefore, there is no problem when the identity identification apparatus 111 performs the security function, but performing the security function by the communication apparatus 113 leads to a security risk. In the solution provided in this embodiment, the security parameter can be processed only by the communication security apparatus 112. As a security module, the communication security apparatus 112 has a higher security level than the communication apparatus 113 (as a protection means of the security module can achieve physical security isolation), to protect the security parameter from being leaked.

In addition, as the security module, the communication security apparatus 112 has a function similar to that of the identity identification apparatus 111. The integration of the communication security apparatus 112 with the identity identification apparatus 111 is to extend a function of the identity identification apparatus 111, so that the identity identification apparatus 111 not only supports an original authentication capability, but also supports a trustworthiness policy negotiation function and a security function that may be newly added in the future, for example, a trustworthiness measurement, to become a security hardware module with more powerful and comprehensive functions, for example, a security smart card.

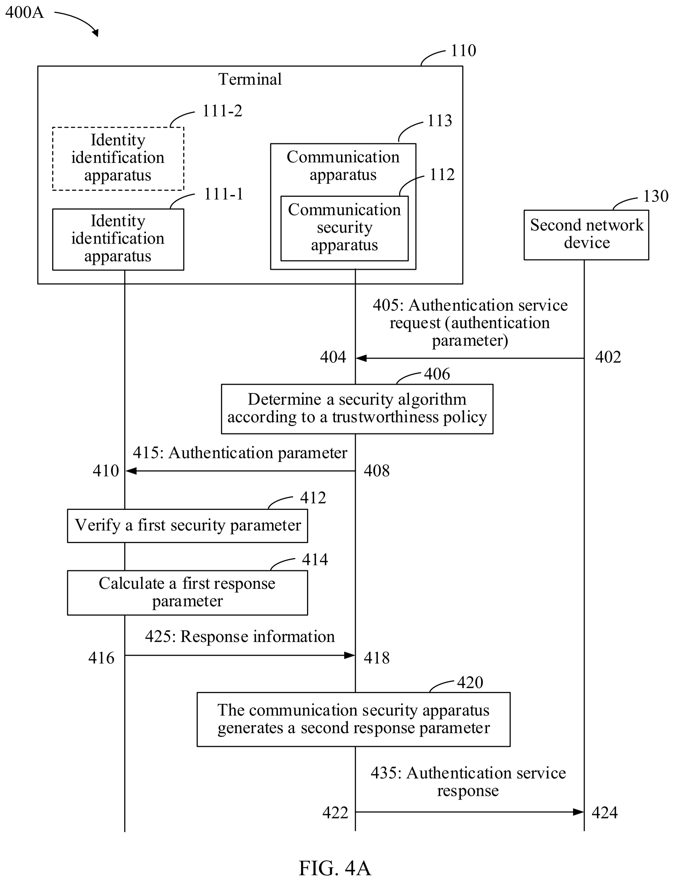

FIG. 4A shows a signaling process 400A of terminal authentication according to some other embodiments of the present disclosure. For clarity of description without any limitation, the signaling process 400 is described with reference to FIG. 1A. For example, the signaling process 400A may be performed by the identity identification apparatuses 111-1 and 111-2, the communication security apparatus 112, the communication apparatus 113, and the second network device 130 in FIG. 1A. In this embodiment, the communication security apparatus 112 is integrated with the communication apparatus 113. In this case, the communication apparatus 113 is responsible for receiving/sending a message. The communication security apparatus 112 is used as an internal function of the communication apparatus 113, is invoked by the communication apparatus 113, and is responsible for performing a security function. The identity identification apparatus 111 may retain an original security function (for example, verifying an AUTN and generating a RES in an AKA authentication process). Alternatively, the identity identification apparatus 111 may only serve as a module that provides a key (for example, a K, an IK, and a CK in the AKA authentication process) required for authentication, while the communication security apparatus 112 performs the security function.

As shown in FIG. 4A, the second network device 130 sends (402), to the communication apparatus 113, an authentication service request 405 carrying an authentication parameter. After the communication apparatus 113 receives (404) the authentication service request 405, the communication apparatus 113 uses the authentication service request 405 as an input parameter to invoke the communication security apparatus 112. The communication security apparatus 112 parses a trustworthiness service request, and determines (406) a to-be-used authentication algorithm according to a trustworthiness policy.

In a possible implementation, a message in communication between the second network device 130 and the communication security apparatus 112 may be encrypted. Transmission of the trustworthiness service request is performed, for example, at a trustworthiness service layer. In such an embodiment, the communication apparatus 113 cannot identify content in an authentication service request message, and therefore cannot extract the authentication parameter carried in the message, and the authentication parameter can be identified and extracted only by the communication security apparatus 112.

For example, the communication security apparatus 112 selects, according to the foregoing preset rule, the identity identification apparatus 111-1 to perform an authentication function. Then, the communication security apparatus 112 sends (408), at the trustworthiness service layer, an authentication parameter 415 to the identity identification apparatus 111-1 through the communication apparatus 113. After the identity identification apparatus 111-1 receives the security parameter 415, the identity identification apparatus 111-1 verifies (412) at least one first security parameter (for example, a MAC and an SQN in the AKA authentication process) in the authentication parameter 415, and invokes, when the verification on the first security parameter succeeds, the authentication algorithm to calculate (414) a first response parameter (for example, a RES in the AKAK authentication process).

The identity identification apparatus 111 sends (416) response information 425 to the communication apparatus 113. In a possible implementation, the identity identification apparatus 111 may further generate a second security parameter. In this case, the response information 425 carries the response parameter and the second security parameter. For example, the second security parameter may be a key parameter in the AKA authentication process, such as an IK and a CK. After receiving (418) the response information 425, the communication apparatus 113 inputs the response parameter and the possible second security parameter in the response information 425 to the communication security apparatus 112. Finally, the communication security apparatus 112 generates a second response parameter (for example, a RES* in the AKAK authentication process) based on the response parameter and the possible second security parameter. The communication apparatus 113 packages an authentication service response 435 into an authentication service message and sends (422) the authentication service response 435 to the second network device 130. The second network device 130 receives (424) the authentication service response 435 to confirm an authentication result.

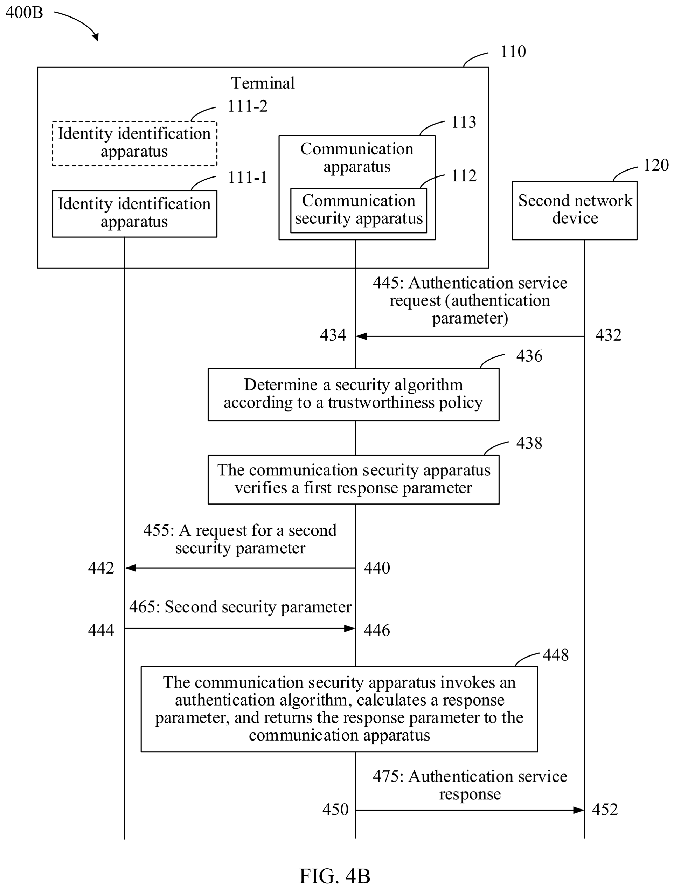

FIG. 4B shows a signaling process 400B of terminal authentication according to some other embodiments of the present disclosure. For clarity of description without any limitation, the signaling process 400B is described with reference to FIG. 1A. For example, the signaling process 400B may be performed by the identity identification apparatuses 111-1 and 111-2, the communication security apparatus 112, the communication apparatus 113, and the second network device 130 in FIG. 1A. In this embodiment, the communication security apparatus 112 is integrated with the communication apparatus 113. In this case, the communication apparatus 113 is responsible for receiving/sending a message. The communication security apparatus 112 is used as an internal function of the communication apparatus 113, is invoked by the communication apparatus 113, and is responsible for performing a security function. The identity identification apparatus 111 only serves as a module that provides a key required for authentication, while the communication security apparatus 112 performs the security function.

As shown in FIG. 4B, the second network device 130 sends (432), to the communication apparatus 113, an authentication service request 445 carrying an input authentication parameter. After the communication apparatus 113 receives (434) the authentication service request 445 from the second network device 130, the communication apparatus 113 uses the authentication service request 405 as an input parameter to invoke the communication security apparatus 112. The communication security apparatus 112 parses a trustworthiness service request, and determines (436) a to-be-used security algorithm according to a trustworthiness policy. Similarly, a message in communication between the second network device 130 and the communication security apparatus 112 may be encrypted and transmitted at a trustworthiness service layer. The communication apparatus 113 cannot identify content in an authentication service request message, and therefore cannot extract the authentication parameter carried in the message, and the authentication parameter can be identified and extracted only by the communication security apparatus 112.

Then, the communication security apparatus 112 verifies (438) at least one first security parameter in the authentication parameter, and sends (440), when verification on the first security parameter succeeds, a request 455 for the second security parameter to the identity identification apparatus 111-1. Herein, for example, the communication security apparatus 112 selects, according to the foregoing rule, the identity identification apparatus 111-1 to perform an authentication function. After the identity identification apparatus 111-1 receives (442) the request 455 for the second security parameter from the communication security apparatus 112, the identity identification apparatus 111-1 sends (444) a second security parameter 465 to the communication apparatus 113. For example, the second security parameter 465 may include a K, an IK, and a CK in an AKA authentication process. After the communication apparatus 113 receives (446) the second security parameter 465, the communication apparatus 113 inputs the second security parameter 465 as a parameter to the communication security apparatus 112. The communication security apparatus 112 invokes the authentication algorithm, calculates (448) a response parameter (for example, a first response parameter RES in the AKA authentication process) based on the obtained second security parameter and the received authentication parameter, and returns the response parameter to the communication apparatus 113. The communication apparatus 113 packages an authentication service response 475 into an authentication service message and sends (450) the authentication service response 475 to the second network device 130. The second network device 130 receives (452) the authentication service response 435 from the communication apparatus 113 to confirm an authentication result.

In such an embodiment, although the communication security apparatus 112, as a logical function module, is integrated with the communication apparatus 113, communication between the communication security apparatus 112 and the second network device is performed at the trustworthiness service layer, and a security message and a parameter remain unknown to the communication apparatus 113. In this manner, a security function of the communication apparatus 113 is decoupled, to facilitate protecting the security parameter from being leaked. In addition, an embodiment in which a function of the identity identification apparatus 111 remains unchanged is applicable to a phase of evolution from 5G to 6G. In contrast, in a solution in which a security function of the identity identification apparatus 111 is reduced, the identity identification apparatus 111 only stores a key and identity information, while the communication security apparatus 112 performs all security functions, so that security execution is decoupled from security storage, to facilitate independent evolution of the security function.

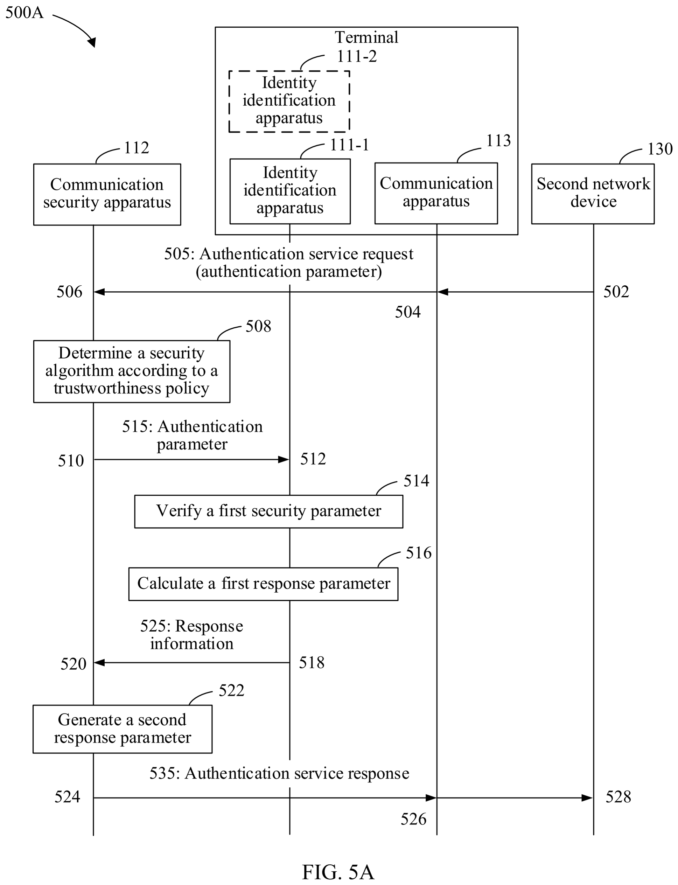

FIG. 5A shows a signaling process 500A of terminal authentication according to some other embodiments of the present disclosure. For clarity of description without any limitation, the signaling process 500A is described with reference to FIG. 1A. For example, the signaling process 500A may be performed by the identity identification apparatuses 111-1 and 111-2, the communication security apparatus 112, the communication apparatus 113, and the second network device 130 in FIG. 1A. Herein, the communication security apparatus 112, the communication apparatus 113, and the identity identification apparatus 111 are independent of each other. In this case, the communication apparatus 113 is responsible for receiving/sending a message. The communication security apparatus 112 is responsible for performing a security function. The identity identification apparatus 111 retains an original security function (for example, verifying an AUTN and generating a RES in an AKA authentication process).

As shown in FIG. 5A, the second network device 130 sends (504) an authentication service request 505 to the communication apparatus 113. In this case, the authentication service request 505 includes an authentication parameter. After receiving the authentication service request 505, the communication apparatus 113 forwards (504) the authentication service request 505 to the communication security apparatus 112. After receiving (506) the authentication service request 505, the communication security apparatus 112 parses a trustworthiness service request, and determines (508) a to-be-used authentication algorithm according to a trustworthiness policy. In this embodiment, for example, the communication security apparatus 112 selects, according to the foregoing rule, the identity identification apparatus 111-1 to perform an authentication function. The communication security apparatus 112 sends (510) an authentication parameter 515 (for example, an AUTN and a RAND in the AKA authentication process) to the identity identification apparatus 111-1. The identity identification apparatus 111-1 verifies (514) at least one first security parameter in the authentication parameter, and calculates (516) a first response parameter (for example, a RES in the AKA authentication process) after verification on the first security parameter succeeds. Then, the identity identification apparatus 111-1 sends (518) response information 525 to the communication security apparatus 112. For example, the response information 525 may include a second security parameter and the first response parameter. After receiving (520) the response information 525, the communication security apparatus 112 generates (522) a second response parameter. For example, the communication security apparatus 112 generates the second response parameter based on the second security parameter and the first response parameter and according to the determined security algorithm. The communication security apparatus 112 sends (524) an authentication service response 535 carrying the second response parameter to the communication apparatus 113. Then, the communication apparatus 113 forwards (526) the authentication service response 535 to the second network device 130. The second network device 130 receives (528) the authentication service response 535 from the communication apparatus 113 to confirm an authentication result.

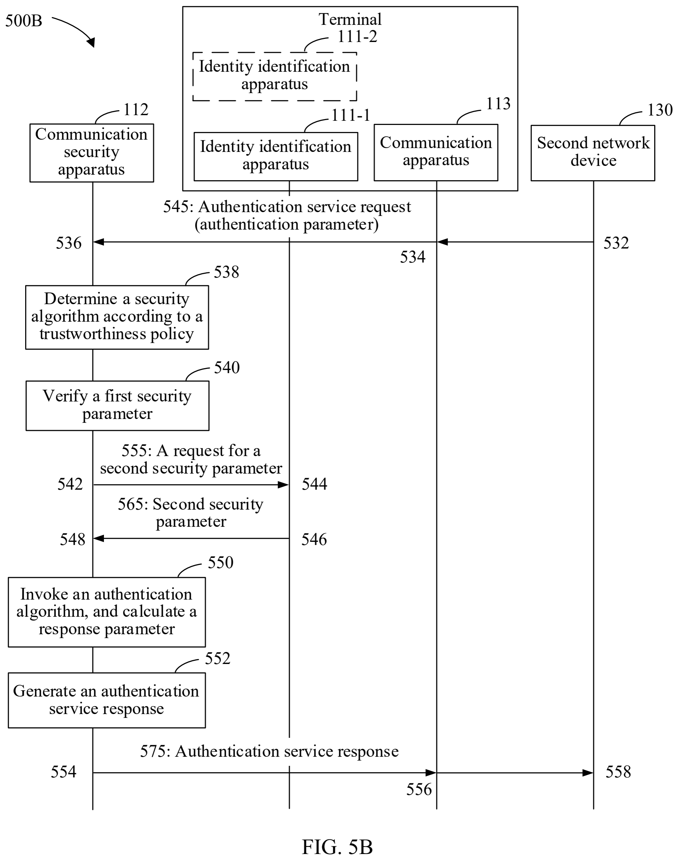

FIG. 5B shows a signaling process 500B of terminal authentication according to some other embodiments of the present disclosure. For clarity of description without any limitation, the signaling process 500B is described with reference to FIG. 1A. For example, the signaling process 500B may be performed by the identity identification apparatuses 111-1 and 111-2, the communication security apparatus 112, the communication apparatus 113, and the second network device 130 in FIG. 1A. Herein, the communication security apparatus 112, the communication apparatus 113, and the identity identification apparatus 111 are independent of each other. In this case, the communication apparatus 113 is responsible for receiving/sending a message. The communication security apparatus 112 is responsible for performing a security function. The identity identification apparatus 111 only serves as a module that provides a key required for authentication, while the communication security apparatus 112 performs the security function.

As shown in FIG. 5B, the second network device 130 sends (534) an authentication service request 545 to the communication apparatus 113. In this case, the authentication service request 545 includes an authentication parameter (for example, an AUTN and a RAND in an AKA authentication process). After receiving the authentication service request 545, the communication apparatus 113 forwards (534) the authentication service request 545 to the communication security apparatus 112. After receiving (536) the authentication service request 545, the communication security apparatus 112 parses a trustworthiness service request, and determines (538) a to-be-used authentication algorithm according to a trustworthiness policy. The communication security apparatus 112 verifies (540) at least one first security parameter in the authentication parameter, and sends, after verification on the first security parameter succeeds, a request 555 for the second security parameter to the identity identification apparatus 111-1. After receiving (544) the request 555 for the second security parameter, the identity identification apparatus 111-1 sends (546) the second security parameter 565 to the communication security apparatus 112. After receiving (548) the second security parameter 565, the communication security apparatus 112 calculates (550) a response parameter. Then, the communication security apparatus 112 generates (552) an authentication service response 575 based on the response parameter, and sends (554) an authentication service response 575 to the communication apparatus 113. Then, the communication apparatus 113 forwards (556) the authentication service response 575 to the second network device 130. The second network device 130 receives (558) the authentication service response 575 from the communication apparatus 113 to confirm an authentication result.

In addition to an authentication service, a trustworthiness service also relates to a trustworthiness measurement technology. In the trustworthiness measurement technology, entities participating in a trustworthiness measurement are an attester (attester) and a verifier (verifier). When the verifier needs to obtain a trustworthiness status of the attester, the verifier sends a challenge (challenge) value to the attester. The attester generates trustworthiness measurement evidence (evidence) based on the challenge value and returns the trustworthiness measurement evidence. The verifier verifies the trustworthiness measurement evidence, and determines, based on a verification result, whether the attester is trustworthiness. Common trustworthiness measurement technologies include a TPM (Trusted Platform Module, TPM), SGX, and the like. The TPM is a dedicated hardware module that is responsible for performing a trustworthiness measurement process. Specifically, a TPM of the attester is responsible for generating and signing evidence, and a TPM of the verifier verifies a signature and verifies the evidence. The following uses a TPM technology as an example to describe a trustworthiness measurement service in detail with reference to FIG. 6A to FIG. 7B.

FIG. 6A shows a signaling process 600A of performing a trustworthiness measurement according to some embodiments of the present disclosure. For clarity of description without any limitation, the signaling process 600A is described with reference to FIG. 1A. For example, the signaling process 600A may be performed by the trustworthiness apparatus 114, the communication security apparatus 112, the communication apparatus 113, and the second network device 130 in FIG. 1A. Herein, the trustworthiness apparatus 114 is deployed on the communication apparatus 113. A function of the trustworthiness apparatus 114 is to perform a trustworthiness measurement on the terminal device 110, to generate evidence. Therefore, data exchange between the trustworthiness apparatus 114 and the terminal device can be implemented more efficiently and conveniently by deploying the trustworthiness apparatus 114 on the communication apparatus 113, to reduce data transmission overheads. The communication security apparatus 112 may be integrated with the identity identification apparatus 111, or may be independent of the communication apparatus 113 and the identity identification apparatus 111.

As shown in FIG. 6A, the second network device 130, as a verifier, sends (602) a trustworthiness measurement service request 605 including challenge information to the terminal device 110. Herein, the challenge information may be a challenge request, and the challenge request may include a random number, a platform configuration register (Platform Configuration Register, PCR) index. After receiving the trustworthiness measurement service request 605, the communication apparatus 113 forwards (604) the trustworthiness measurement service request 605 to the communication security apparatus 112. After receiving (606) the trustworthiness measurement service request 605, the communication security apparatus 112 parses a trustworthiness service request, and determines (608), according to a trustworthiness policy, that an apparatus that is to perform a trustworthiness measurement service is the trustworthiness apparatus 114. Then, the communication security apparatus 112 sends (610) the challenge information 615 to the communication apparatus 113. After receiving (612) the challenge information 615, the communication apparatus 113 inputs the challenge information 615 to the trustworthiness apparatus 114. The trustworthiness apparatus 114 generates (614) evidence based on the challenge information, and signs the evidence. Herein, the evidence is, for example, an integrity indicator that is generated based on a random number in the challenge information and that is for a corresponding platform configuration register. The trustworthiness apparatus 114 sends

(616) the generated evidence and a trustworthiness apparatus signature 625 to the communication security apparatus 112 through the communication apparatus 113. In a possible implementation, after receiving (618) the evidence and the trustworthiness apparatus signature 625, the communication security apparatus 112 may sign (620) the evidence. Then, the communication security apparatus 112 generates a trustworthiness measurement service response 635, and sends (622) the trustworthiness measurement service response 635 to the communication apparatus 113. Herein, the trustworthiness measurement service response 635 includes the evidence and the trustworthiness apparatus signature, and optionally may further include a communication security apparatus signature. After receiving the trustworthiness measurement service response 635, the communication apparatus 113 forwards (624) the trustworthiness measurement service response 635 to the verifier, that is, the second network device 130. The second network device 130 receives (626) the trustworthiness measurement service response 635 from the communication apparatus 113 to determine a trustworthiness measurement service result.

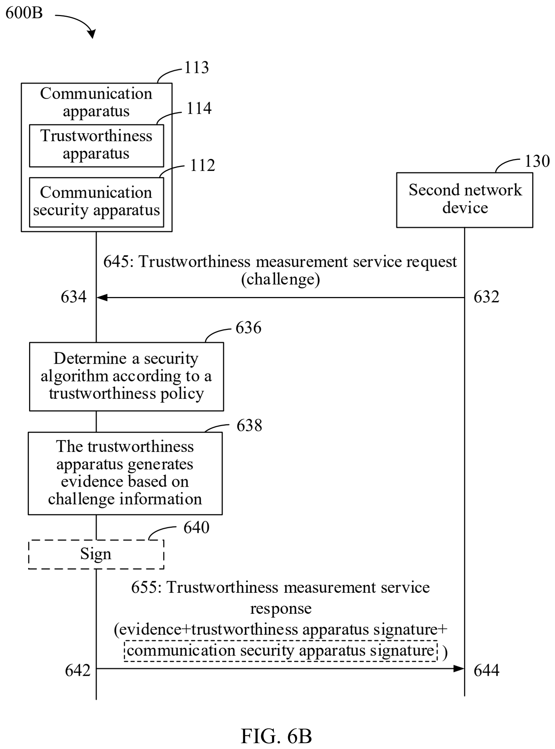

FIG. 6B shows a signaling process 600B of performing a trustworthiness measurement according to some embodiments of the present disclosure. For clarity of description without any limitation, the signaling process 600B is described with reference to FIG. 1A. For example, the signaling process 600B may be performed by the trustworthiness apparatus 114, the communication security apparatus 112, the communication apparatus 113, and the second network device 130 in FIG. 1A. Herein, the trustworthiness apparatus 114 and the communication security apparatus 112 are deployed together on the communication apparatus 113.

As shown in FIG. 6B, the second network device 130, as a verifier, sends (632) a trustworthiness measurement service request 645 including challenge information to the terminal device 110. After receiving (634) the trustworthiness measurement service request 645, the communication apparatus 113 forwards the trustworthiness measurement service request 645 to the communication security apparatus 112. After receiving the trustworthiness measurement service request 645, the communication security apparatus 112 parses the trustworthiness measurement service request, and determines (636), according to a trustworthiness policy, that an apparatus that is to perform a trustworthiness measurement service is the trustworthiness apparatus 114. Then, the trustworthiness apparatus 114 generates (638) evidence based on the challenge information, and signs the evidence. In a possible implementation, the communication security apparatus 112 may sign (640) the evidence. Then, the communication security apparatus 112 generates a trustworthiness measurement service response 655, and sends (642) the evidence to the verifier, namely, the second network device 130, through the communication apparatus 113. Herein, the trustworthiness measurement service response 655 includes the evidence and a trustworthiness apparatus signature, and optionally may further include a communication security apparatus signature. The second network device 130 receives (644) the trustworthiness measurement service response 655 from the communication apparatus 113 to determine a trustworthiness measurement service result.

In such an embodiment, the communication apparatus 113 cannot directly invoke a trustworthiness measurement module. Instead, the communication security apparatus 112 is responsible for determining a to-be-used trustworthiness measurement algorithm, and the communication security apparatus 112 invokes the trustworthiness apparatus 114, to provide secure and reliable input and output assurance for the trustworthiness apparatus 114. During performing of the trustworthiness measurement service, the challenge information is invisible to the communication apparatus 113, to protect a parameter from being leaked.

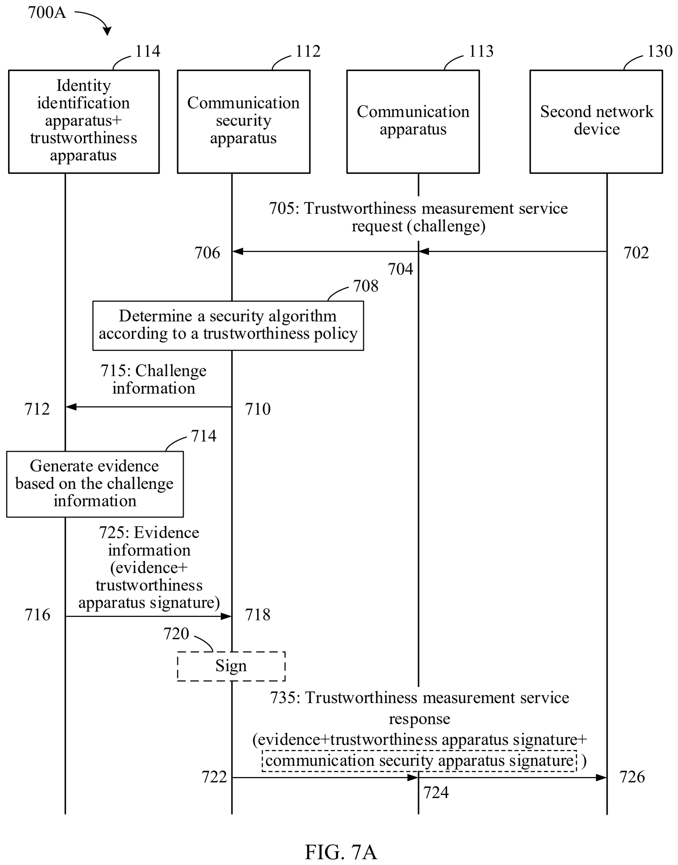

FIG. 7A shows a signaling process 700A of performing a trustworthiness measurement according to some embodiments of the present disclosure. For clarity of description without any limitation, the signaling process 700A is described with reference to FIG. 1A. For example, the signaling process 700A may be performed by the trustworthiness apparatus 114, the communication security apparatus 112, the communication apparatus 113, and the second network device 130 in FIG. 1A. Herein, the trustworthiness apparatus 114 and the identity identification apparatus 111 are integrated, for example, to form a smart card having a trustworthiness measurement function and an identity identification apparatus function. In this embodiment, the trustworthiness apparatus 114 represents an integrated apparatus of the trustworthiness apparatus 114 and the identity identification apparatus 111.

As shown in FIG. 7A, the second network device 130, as a verifier, sends (702) a trustworthiness measurement service request 705 including challenge information to the terminal device 110. After receiving the trustworthiness measurement service request 705, the communication apparatus 113 forwards (704) the trustworthiness measurement service request 705 to the communication security apparatus 112. After receiving (706) the trustworthiness measurement service request 705, the communication security apparatus 112 parses the trustworthiness measurement service request 705, and determines (708), according to a trustworthiness policy, that an apparatus that is to perform a trustworthiness measurement service is the trustworthiness apparatus 114. Then, the communication security apparatus 112 sends (710) the challenge information 715 to the trustworthiness apparatus 114. After receiving (712) the challenge information 715, the trustworthiness apparatus 114 generates (714) evidence based on the challenge information, and signs the evidence. The trustworthiness apparatus 114 sends (716) the generated evidence and a trustworthiness apparatus signature 725 to the communication security apparatus 112. In a possible implementation, after receiving (718) the evidence and the trustworthiness apparatus signature 625, the communication security apparatus 112 may sign (720) the evidence. Then, the communication security apparatus 112 generates a trustworthiness measurement service response 735, and sends (722) the trustworthiness measurement service response 735 to the communication apparatus 113. Herein, the trustworthiness measurement service response 735 includes the evidence and the trustworthiness apparatus signature, and optionally may further include a communication security apparatus signature. After receiving the trustworthiness measurement service response 735, the communication apparatus 113 forwards (724) the trustworthiness measurement service response 735 to the verifier, that is, the second network device 130. The second network device 130 receives (726) the trustworthiness measurement service response 735 from the communication apparatus 113 to determine a trustworthiness measurement service result.

In such an embodiment, both the trustworthiness apparatus 114 and the identity identification apparatus 111 are security-related dedicated hardware modules, and there is high feasibility for integration. The trustworthiness apparatus 114 is integrated with the identity identification apparatus 111, so that a security function can be more easily isolated from another communication function, and an internal structure and an interface of the terminal device are simplified.

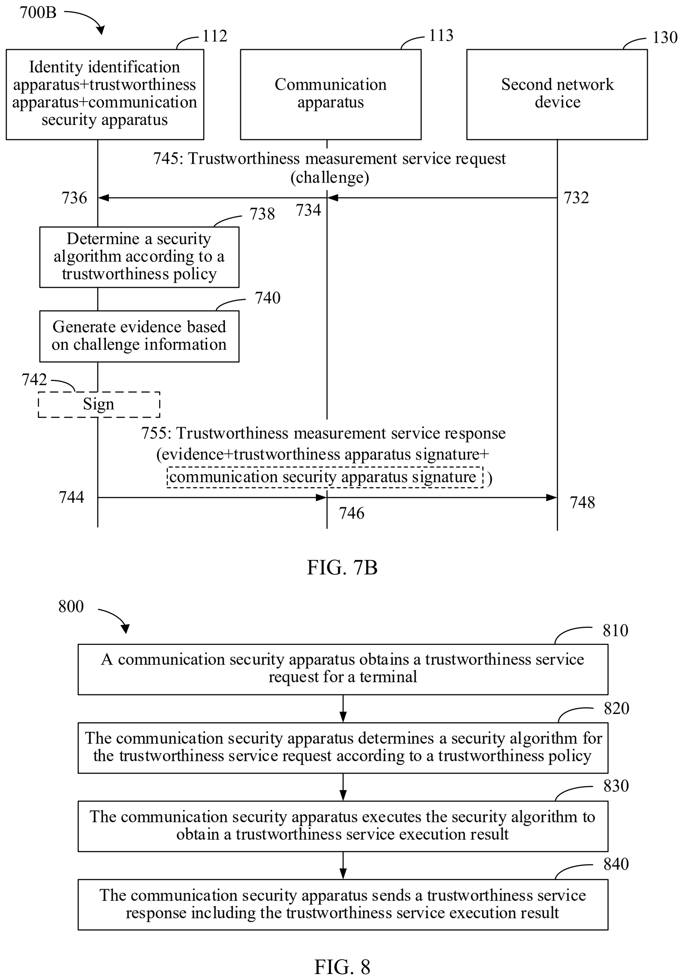

FIG. 7B shows a signaling process 700B of performing a trustworthiness measurement according to some embodiments of the present disclosure. For clarity of description without any limitation, the signaling process 700B is described with reference to FIG. 1A. For example, the signaling process 700B may be performed by the trustworthiness apparatus 114, the communication security apparatus 112, the communication apparatus 113, and the second network device 130 in FIG. 1A. Herein, the trustworthiness apparatus 114, the communication security apparatus 112 and the identity identification apparatus 111 are integrated, for example, to form a smart card having a trustworthiness measurement function, a security function, and an identity identification apparatus function. In this embodiment, the communication security apparatus 112 represents an integrated apparatus of the trustworthiness apparatus 114, the communication security apparatus 112, and the identity identification apparatus 111.

As shown in FIG. 7B, the second network device 130, as a verifier, sends (732) a trustworthiness measurement service request 745 including challenge information to the terminal device 110. After receiving the trustworthiness measurement service request 745, the communication apparatus 113 forwards (734) the trustworthiness measurement service request 745 to the communication security apparatus 112. After receiving (736) the trustworthiness measurement service request 745, the communication security apparatus 112 parses a trustworthiness service request, and determines (738), according to a trustworthiness policy, an algorithm used to perform a trustworthiness measurement service. Then, the communication security apparatus 112 generates (740) evidence based on the challenge information, and signs the evidence, to obtain a trustworthiness apparatus signature. In a possible implementation, the communication security apparatus 112 may further re-sign (742) the evidence to obtain a communication security apparatus signature. Then, the communication security apparatus 112 generates a trustworthiness measurement service response 755, and sends (744) the trustworthiness measurement service response 755 to the communication apparatus 113. Herein, the trustworthiness measurement service response 755 includes the evidence, the trustworthiness apparatus signature, and may further include the communication security apparatus signature. After receiving the trustworthiness measurement service response 755, the communication apparatus 113 forwards (746) the trustworthiness measurement service response 755 to the verifier, that is, the second network device 130. The second network device 130 receives (748) the trustworthiness measurement service response 755 from the communication apparatus 113 to determine a trustworthiness measurement service result.

In such an embodiment, apparatuses related to an installation function are highly integrated, so that an interaction procedure is simplified, to avoid information leakage.

FIG. 8 is a flowchart of a method 800 implemented by a terminal device according to an embodiment of the present disclosure. In a possible implementation, the method 800 may be implemented by the communication security apparatus 112 in the example communication architecture scenario 100. In another possible implementation, the method 800 may alternatively be implemented by another electronic apparatus independent of the example communication architecture scenario 100. As an example, the following describes the method 800 by using an example in which the method 800 is implemented by the communication security apparatus 112 in the example communication architecture scenario 100.

As shown in FIG. 8, in 810, the communication security apparatus 112 obtains a trustworthiness service request for a terminal 110; in 820, the communication security apparatus 112 determines a security algorithm for the trustworthiness service request according to a trustworthiness policy; in 830, the communication security apparatus 112 executes the security algorithm to obtain a trustworthiness service execution result; and in 840, the communication security apparatus 112 sends a trustworthiness service response including the trustworthiness service execution result.

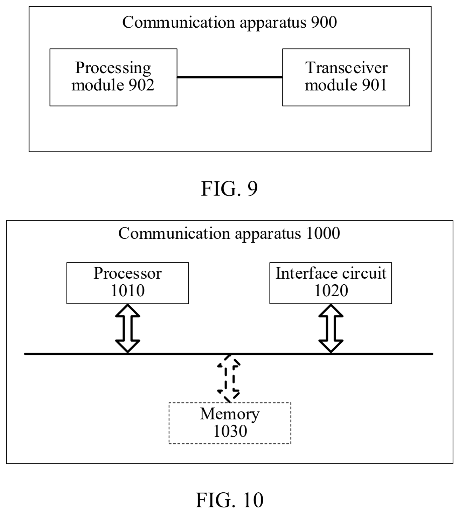

FIG. 9 and FIG. 10 are diagrams of possible structures of communication apparatuses according to embodiments of the present disclosure. The communication apparatuses may implement a function of the terminal device or the network device in the foregoing method embodiments, so that beneficial effect of the foregoing method embodiments can also be implemented. In embodiments of the present disclosure, the communication apparatus may be the terminal device 110 shown in FIG. 1A, or may be a module (for example, a chip) used in the device.

As shown in FIG. 9, a communication apparatus 900 includes a transceiver module 901 and a processing module 902. The communication apparatus 900 may be configured to implement a function of the terminal device or the network device in the method embodiment shown in FIG. 8. It should be understood that the transceiver module 901 may be an interface that is configured to communicate with another device and that complies with a corresponding protocol.

When the communication apparatus 900 is configured to implement a function of the terminal device 110 in the method embodiment in FIG. 8, the transceiver module 901 is configured to: obtain a trustworthiness service request for the terminal; and send a trustworthiness service response including a trustworthiness service execution result.

When the communication apparatus 900 is configured to implement a function of the second network device 120 in the method embodiment in FIG. 2, the transceiver module 901 is configured to: determine a security algorithm for the trustworthiness service request according to a trustworthiness policy; and execute the security algorithm to obtain a trustworthiness service execution result.

For more detailed descriptions of the transceiver module 901 and the processing module 902, refer to related descriptions in the foregoing method embodiments. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, input data required by the processor 1010 to run instructions, or data generated after the processor 1010 runs instructions.

When the communication apparatus 1000 is configured to implement the method in the foregoing method embodiments, the processor 1010 may be configured to perform a function of the processing module 902, and the interface circuit 1020 may be configured to perform a function of the transceiver module 901.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements a function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that the processor in embodiments of the present disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

An embodiment of the present disclosure further provides a chip. The chip may include an input interface, an output interface, and a processing circuit. In embodiments of this application, the input interface and the output interface may complete signaling or data exchange, and the processing circuit may complete generation and processing of signaling or data information. For example, a chip of the communication security apparatus 112 may obtain a trustworthiness service request for the terminal. The chip of the communication security apparatus 112 may determine a security algorithm for the trustworthiness service request according to a trustworthiness policy. The chip of the communication security apparatus 112 may execute the security algorithm to obtain a trustworthiness service execution result. The chip of the communication security apparatus 112 may send a trustworthiness service response including the trustworthiness service execution result.

An embodiment of the present disclosure further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is caused to implement the method in any one of the foregoing embodiments. For example, the chip system may include one or more chips, or may include a chip and another discrete device.

An embodiment of the present disclosure further provides a processor, configured to be coupled to a memory. The memory stores instructions. When the processor runs the instructions, the processor is caused to perform the method and the function in any one of the foregoing embodiments.

An embodiment of the present disclosure further provides a computer program product including instructions. When the computer program product runs on a computer, the computer is caused to perform the method and the function in any one of the foregoing embodiments.

An embodiment of the present disclosure further provides a computer-readable storage medium. The computer-readable storage medium stores computer instructions. When a processor runs the instructions, the processor is caused to perform the method and the function in any one of the foregoing embodiments.

Usually, various embodiments of the present disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. While various aspects of embodiments of the present disclosure are shown and described as block diagrams, flowcharts, or represented by some other illustrations, it should be understood that the blocks, apparatuses, systems, techniques, or methods described herein may be implemented as, for example, non-limiting examples, in hardware, software, firmware, a dedicated circuit or logic, general-purpose hardware or a controller or another computing device, or some combinations thereof.

The present disclosure further provides at least one computer program product tangibly stored in a non-transitory computer-readable storage medium. The computer program product includes computer-executable instructions, for example, instructions included in a program module, which are executed in a device on a real or virtual target processor, to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

A computer program used for implementing the method in the present disclosure may be written in one or more programming languages. The computer program may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. A program code may be executed entirely on a computer, partly on a computer, as a standalone software package, partly on a computer and partly on a remote computer, or entirely on a remote computer or a server.

In the context of the present disclosure, the computer program or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of computer-readable storage medium include an electrical connection with one or more wires, a portable computer disk, a hard disk drive, a random-access memory (Random-access memory, RAM), a read-only memory (Read-Only Memory, ROM), an erasable programmable read-only memory (Erasable Programmable Read-Only Memory, EPROM), an optical storage device, a magnetic storage device, or any suitable combination thereof.

In addition, although the operations of the methods in the present disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that the features and functions of two or more apparatuses according to the present disclosure may be specific in one apparatus. Instead, features and functions of one apparatus described above may be further specific in a plurality of apparatuses.

The foregoing has described various implementations of the present disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A communication method, comprising:
obtaining, by a communication security apparatus, a trustworthiness service request for a terminal;
determining, by the communication security apparatus, a security algorithm for the trustworthiness service request according to a trustworthiness policy;
executing, by the communication security apparatus, the security algorithm to obtain a trustworthiness service execution result; and
sending, by the communication security apparatus, a trustworthiness service response comprising the trustworthiness service execution result.

2. The method according to claim 1, wherein
the trustworthiness service request is received from a communication apparatus of the terminal, and the trustworthiness service response is sent to the communication apparatus.

3. The method according to claim 1, wherein the trustworthiness service request is obtained from a network device, and a communication apparatus of the terminal is integrated with the communication security apparatus.

4. The method according to any one of claims 1 to 3, wherein the trustworthiness service request is obtained and sent at a trustworthiness protocol layer.

5. The method according to any one of claims 1 to 4, wherein executing the security algorithm comprises:
in response to determining that the trustworthiness service request comprises a set of authentication request parameters, verifying, by the communication security apparatus, at least one security parameter in the set of authentication parameters, wherein
in response to that the verification succeeds, the trustworthiness service execution result comprises a first authentication response parameter, and the first authentication response parameter is obtained by executing a first security algorithm in the security algorithm based on the set of authentication request parameters; or
in response to that the verification fails, the trustworthiness service execution result comprises a verification failure indication.

6. The method according to claim 3, wherein executing the security algorithm comprises:
in response to determining that the trustworthiness service request comprises a set of authentication request parameters, verifying, by the communication security apparatus, at least one security parameter in the set of authentication parameters, wherein
in response to that the verification succeeds, the trustworthiness service execution result comprises a second authentication response parameter, the second authentication response parameter is obtained by executing a second security algorithm in the security algorithm based on a first authentication response parameter, and the first authentication response parameter is obtained by executing a first security algorithm in the security algorithm based on the set of authentication request parameters; or
in response to that the verification fails, the trustworthiness service execution result comprises a verification failure indication.

7. The method according to claim 5 or 6, wherein the at least one security parameter comprises at least one of the following: an authentication code or a sequence number.

8. The method according to claim 5, wherein executing the first security algorithm further comprises:
obtaining, by the communication security apparatus, a set of key parameters; and
executing, by the communication security apparatus, the first security algorithm based on the set of key parameters and the set of authentication request parameters to obtain the first authentication response parameter.

9. The method according to claim 8, wherein obtaining the set of key parameters comprises:
sending, by the communication security apparatus, a request for the set of key parameters to an identity identification apparatus; and
receiving, by the communication security apparatus, the set of key parameters from the identity identification apparatus.

10. The method according to any one of claims 1 to 9, wherein executing the security algorithm comprises:
in response to determining that the trustworthiness service request comprises the set of authentication request parameters, sending, by the communication security apparatus, the set of authentication request parameters to the identity identification apparatus;
receiving, by the communication security apparatus, the first authentication response parameter from the identity identification apparatus, wherein the first authentication response parameter is determined by the identity identification apparatus based on the set of authentication request parameters; and
executing, by the communication security apparatus, the second security algorithm in the security algorithm based on the first authentication response parameter to obtain the second authentication response parameter, wherein the trustworthiness service execution result comprises the second authentication response parameter.

11. The method according to claim 9 or 10, further comprising:
in response to determining that the terminal comprises a plurality of identity identification apparatuses, selecting, by the communication security apparatus, a target identity identification apparatus from the plurality of identity identification apparatuses based on a predetermined configuration.

12. The method according to claim 11, wherein selecting the target identity identification apparatus comprises:
in response to determining that corresponding priorities are set for the plurality of identity identification apparatuses, selecting, by the communication security apparatus, an identity identification apparatus with a highest priority in the plurality of identity identification apparatuses as the target identity identification apparatus;
in response to determining that no priority is set for the plurality of identity identification apparatuses, selecting, by the communication security apparatus, a currently activated identity identification apparatus as the target identity identification apparatus, wherein the activated identity identification apparatus is providing a communication service; or
in response to determining that none of the plurality of identity identification apparatuses provides the communication service, presenting, by the communication security apparatus, options for the plurality of identity identification apparatuses to a user; and
in response to receiving a selection of the user, selecting, by the communication security apparatus, an identity identification apparatus selected by the user as the target identity identification apparatus.

13. The method according to any one of claims 1 to 12, wherein the trustworthiness policy is negotiated between the communication security apparatus and the network device.

14. The method according to any one of claims 1 to 13, wherein executing the security algorithm comprises:
in response to determining that the trustworthiness service request comprises challenge information for a trustworthiness measurement, executing, by the communication security apparatus, a third security algorithm in the security algorithm based on the challenge information to obtain evidence, wherein the trustworthiness service execution result comprises the evidence.

15. The method according to any one of claims 1 to 13, wherein executing the security algorithm comprises:
in response to determining that the trustworthiness service request comprises challenge information for a trustworthiness measurement, sending, by the communication security apparatus, the challenge information to a trustworthiness apparatus of the terminal; and
receiving, by the communication security apparatus, evidence from the trustworthiness apparatus, wherein the evidence is generated by the trustworthiness apparatus based on the challenge information, and the trustworthiness service execution result comprises the evidence.

16. The method according to claim 14, wherein the trustworthiness apparatus is integrated into the communication security apparatus.

17. The method according to claim 15, wherein the trustworthiness apparatus is integrated into the communication apparatus or the identity identification apparatus.

18. The method according to claim 14 or 15, further comprising:
signing, by the communication security apparatus, the evidence, wherein the trustworthiness service result comprises a signature for the evidence.

19. A communication security apparatus, comprising:
a transceiver module, configured to obtain a trustworthiness service request for a terminal;
and
a processing module, configured to determine a security algorithm for the trustworthiness service request according to a trustworthiness policy, wherein
the processing module is further configured to execute the security algorithm to obtain a trustworthiness service execution result; and
the transceiver module is further configured to send a trustworthiness service response comprising the trustworthiness service execution result.

20. The communication security apparatus according to claim 19, wherein
the trustworthiness service request is received from a communication apparatus of the terminal, and the trustworthiness service response is sent to the communication apparatus.

21. The communication security apparatus according to claim 19, wherein the trustworthiness service request is obtained from a network device, and the communication apparatus of the terminal is integrated with the communication security apparatus.

22. The communication security apparatus according to any one of claims 19 to 21, wherein the trustworthiness service request is obtained and sent at a trustworthiness protocol layer.

23. The communication security apparatus according to claim 20, wherein the processing module is specifically configured to:
in response to determining that the trustworthiness service request comprises a set of authentication request parameters, verify at least one security parameter in the set of authentication parameters, wherein
in response to that the verification succeeds, the trustworthiness service execution result comprises a first authentication response parameter, and the first authentication response parameter is obtained by executing a first security algorithm in the security algorithm based on the set of authentication request parameters; or
in response to that the verification fails, the trustworthiness service execution result comprises a verification failure indication.

24. The communication security apparatus according to claim 21, wherein the processing module is specifically configured to:
in response to determining that the trustworthiness service request comprises a set of authentication request parameters, verify at least one security parameter in the set of authentication parameters, wherein
in response to that the verification succeeds, the trustworthiness service execution result comprises a second authentication response parameter, the second authentication response parameter is obtained by executing a second security algorithm in the security algorithm based on a first authentication response parameter, and the first authentication response parameter is obtained by executing a first security algorithm in the security algorithm based on the set of authentication request parameters; or
in response to that the verification fails, the trustworthiness service execution result comprises a verification failure indication.

25. The communication security apparatus according to claim 23 or 24, wherein the at least one security parameter comprises at least one of the following: an authentication code or a sequence number.

26. The communication security apparatus according to claim 23, wherein
the transceiver module is specifically configured to obtain a set of key parameters; and
the processing module is specifically configured to execute the first security algorithm based on the set of key parameters and the set of authentication request parameters to obtain the first authentication response parameter.

27. The communication security apparatus according to claim 24, wherein the transceiver module is specifically configured to:
send a request for the set of key parameters to an identity identification apparatus; and
receive the set of key parameters from the identity identification apparatus.

28. The communication security apparatus according to any one of claims 19 to 27, wherein the transceiver module is specifically configured to: in response to determining that the trustworthiness service request comprises the set of authentication request parameters, send the set of authentication request parameters to the identity identification apparatus; and
receive the first authentication response parameter from the identity identification apparatus, wherein the first authentication response parameter is determined by the identity identification apparatus based on the set of authentication request parameters, and
the processing module is specifically configured to execute the second security algorithm in the security algorithm based on the first authentication response parameter to obtain the second authentication response parameter, wherein the trustworthiness service execution result comprises the second authentication response parameter.

29. The communication security apparatus according to any one of claims 17 to 28, wherein the trustworthiness policy is negotiated between the communication security apparatus and the network device.

30. The communication security apparatus according to claim 28 or 29, wherein the processing module is further configured to:
in response to determining that the terminal comprises a plurality of identity identification apparatuses, select a target identity identification apparatus from the plurality of identity identification apparatuses based on a predetermined configuration.

31. The communication security apparatus according to claim 30, wherein the processing module is specifically configured to:
in response to determining that corresponding priorities are set for the plurality of identity identification apparatuses, select an identity identification apparatus with a highest priority in the plurality of identity identification apparatuses as the target identity identification apparatus;
in response to determining that no priority is set for the plurality of identity identification apparatuses, select a currently activated identity identification apparatus as the target identity identification apparatus, wherein the activated identity identification apparatus is providing a communication service; or
in response to determining that none of the plurality of identity identification apparatuses provides the communication service, present options for the plurality of identity identification apparatuses to a user, and
in response to receiving a selection of the user, select an identity identification apparatus selected by the user as the target identity identification apparatus.

32. The communication security apparatus according to any one of claims 17 to 31, wherein the processing module is further configured to:
in response to determining that the trustworthiness service request comprises challenge information for a trustworthiness measurement, execute a third security algorithm in the security algorithm based on the challenge information to obtain evidence, wherein the trustworthiness service execution result comprises the evidence.

33. The communication security apparatus according to any one of claims 17 to 31, wherein the transceiver module is specifically configured to:
in response to determining that the trustworthiness service request comprises challenge information for a trustworthiness measurement, send the challenge information to a trustworthiness apparatus of the user equipment; and
receive evidence from the trustworthiness apparatus, wherein the evidence is generated by the trustworthiness apparatus based on the challenge information, and the trustworthiness service execution result comprises the evidence.

34. The communication security apparatus according to claim 33, wherein the trustworthiness apparatus is integrated into the communication security apparatus.

35. The communication security apparatus according to claim 34, wherein the trustworthiness apparatus is integrated into the communication apparatus or the identity identification apparatus.

36. The communication security apparatus according to claim 34 or 35, wherein the processing module is further configured to:
sign the evidence, wherein the trustworthiness service result comprises a signature for the evidence.

37. A communication security apparatus, comprising a processor, wherein the processor is coupled to a memory, the memory stores instructions, and when the instructions are executed by the processor, the communication security apparatus is caused to perform the method according to any one of claims 1 to 18.

38. A computer-readable storage medium, wherein the computer-readable storage medium stores instructions, and when the instructions are run, the method according to any one of claims 1 to 18 is performed.

39. A computer program product, wherein the computer program product comprises instructions, and when the instructions are run, the method according to any one of claims 1 to 18 is performed.

40. A terminal device, comprising the communication security apparatus according to claim 37.
